# EUROPÄISCHE PATENTSCHRIFT

(11) **EP 3 105 126 B1**
(45) Veröffentlichungstag und Bekanntmachung des Hinweises auf die Patenterteilung: **11.07.2018**
(21) Anmeldenummer: 15711034.7
(22) Anmeldetag: 10.02.2015
(51) Int. Cl.: B65B 13/06, B65B 13/22, G06F 17/24, G06K 9/22, G09G 5/12, H04W 88/06

(54) **SPANNEINRICHTUNG FÜR EINE UMREIFUNGSVORRICHTUNG**
TENSIONING DEVICE FOR A STRAPPING DEVICE
DISPOSITIF DE TENSION POUR DISPOSITIF DE CERCLAGE

(30) Priorität: 10.02.2014 CH 181142014; 10.02.2014 CH 182142014; 10.02.2014 CH 183142014
(43) Veröffentlichungstag der Anmeldung: 21.12.2016
(73) Patentinhaber: Orgapack GmbH, 8953 Dietikon (CH)
(72) Erfinder: HUBER, Hans, CH-5607 Hägglingen (CH); TAKIDIS, Dimitrios, CH-8600 Zürich (CH); WIDMER, Roland, CH-5620 Bremgarten (CH)
(74) Vertreter: Klein, Friedrich Jürgen
(86) Internationale Anmeldenummer: PCT/CH2015/000013
(87) Internationale Veröffentlichungsnummer: WO 2015/117254

(56) Entgegenhaltungen:
- WO-A1-01/89929
- GB-A- 2 041 869
- GB-A- 2 481 724
- US-A1- 2009 114 308

## Beschreibung

Die Erfindung betrifft eine Spanneinrichtung einer Umreifungsvorrichtung zur Umreifung von Packgut mit einem Umreifungsband, insbesondere mit einem Kunststoffumreifungsband, das mit einem Spannrad versehen ist, das mit einer Antriebseinrichtung wirkverbunden oder wirkverbindbar ist, um das Spannrad in eine Rotationsbewegung um eine Rotationsachse zu versetzen, wobei das Spannrad eine Umfangsfläche aufweist, die zum Eingriff in das Umreifungsband bestimmt ist. Im Zusammenhang mit der Erfindung kann die Spanneinrichtung sowohl für stationäre als auch für mobile, insbesondere für tragbare, Umreifungsvorrichtungen vorgesehen sein.

Derartige Umreifungsvorrichtungen können u.a. als stationäre Anlage ausgebildet sein, die dazu benutzt wird, größere Packgüter oder zu einer Packguteinheit zusammengestellte mehrere einzelne Packgüter mit einem oder mehreren Bandumreifungen zu versehen. Siehe z.B. GB-A-2 481 724. Die Bandumreifungen werden üblicherweise aus einem Band gebildet, das von einer Vorratsrolle abgezogen und als ringförmige Umreifung um das Packgut gelegt wird. Hierzu wird das Umreifungsband mit seinem freien Ende voraus in einen Kanal der Umreifungsvorrichtung geschossen, der das Packgut mit Abstand portalartig oder ringförmig umgibt. Üblicherweise wird sobald das Bandende eine bestimmte Stelle im Kanal erreicht hat, das Bandende geklemmt und das Band dann wieder zurückgezogen. Als Folge davon zieht sich die Schlaufe des Umreifungsbands zu und das Band gelangt aus dem Kanal in Anlage gegen das Packgut. Anschliessend wird auf das Band eine Bandspannung aufgebracht, der Bandring mit einem Verschluss versehen und von der Vorratsrolle abgetrennt. Als Umreifungsband werden sowohl metallische Bänder als auch Kunststoffbänder eingesetzt. Die Umreifungsvorrichtungen sind üblicherweise an die mit ihnen zu verwendeten Umreifungsbandtypen angepasst, insbesondere in Bezug auf die Verbindungseinrichtung, mit der zwei abschnittsweise übereinanderliegende Bandlagen der Umreifungsbänder unlösbar miteinander verbunden werden.

Bei vorbekannten Lösungen wird beim Rückzug des Umreifungsbands das Band der Schlaufe in der Regel mit hoher Geschwindigkeit in eine Richtung zurückgezogen, die entgegengesetzt zu der Vorschubrichtung ausgerichtet ist, mit der das Band zuvor in den Kanal hineingeschossen wurde. In diesem Rückzugsweg ist üblicherweise auch das Spannrad der Spanneinrichtung angeordnet, mit dem erst nachfolgend der Spannvorgang ausgeführt wird. Da das Spannrad während des Rückzugsvorgangs üblicherweise nicht angetrieben wird und damit still steht, besteht die Gefahr, dass beim Bandrückzug das Umreifungsband über das Spannrad geführt bzw. gezogen wird. Durch den Kontakt und die Relativbewegung zwischen dem Spannrad und dem Umreifungsband kann das Umreifungsband durch das Spannrad beschädigt werden. Diese Gefahr ist umso grösser, wenn die Umfangsfläche des Spannrads nicht glattflächig sondern mit einer geometrisch bestimmten oder unbestimmten aufgerauhten Oberfläche, wie beispielsweise einer Riffelung, Rändelung oder Verzahnung versehen ist, wie dies zur Verbesserung der Eingriffsverhältnisse und zur Vermeidung von Schlupf bei Spannrädern üblich ist. Als Folge solcher durch das Spannrad erzeugten Beschädigungen des Umreifungsbands, kann die Zugfestigkeit des Umreifungsbands im Bereich der Beschädigung reduziert werden, so dass das Band bei der vorgesehenen Zugspannung reisst. Weitere Nachteile eines solchen Eingriffs können in der durch die Reibung bedingte Verringerung der Bandrückzugsgeschwindigkeit sowie im Abrieb gesehen werden, der durch den Kontakt des Bands mit der rauhen Oberfläche des Spannrads während der Bandrückzugsphase entsteht.

Der Erfindung liegt deshalb die Aufgabe zugrunde, eine Umreifungseinrichtung zur Umreifung von Packgut mit einem Umreifungsband dahingehend zu verbessern, dass Nachteile, die durch die Relativgeschwindigkeit zwischen dem Spannrad und dem Band während der Bandrückzugsphase auftreten, möglichst vermieden werden.

Diese Aufgabe wird durch eine Spanneinrichtung der eingangs genannten Art erfindungsgemäss dadurch gelöst, dass im Bereich der Umfangsfläche des Spannrads zumindest ein bewegliches Abstandselement am Spannrad vorgesehen ist, das in einer ersten Position und in einer sich davon unterscheidenden zweiten Position angeordnet werden kann, wobei in der ersten Position das Abstandselement zumindest abschnittsweise mit einem ersten Abstand zur Drehachse des Spannrads und in der zweiten Position mit einem zumindest abschnittsweisen zweiten Abstand zur Drehachse des Spannrads anordenbar ist, sich hierbei der erste Abstand vom zweiten Abstand unterscheidet und das Abstandselement in zumindest einer der beiden Positionen über die Umfangsfläche des Spannrads übersteht. In diesem Zusammenhang kann unter dem Abstand zur Drehachse vorzugsweise ein Abstand eines Bereichs des jeweiligen Abstandselements zur Drehachse verstanden werden, der zumindest in einer der beiden Position zum Kontakt mit dem Umreifungsband vorgesehen ist. Die Erfindung ermöglicht somit, dass mittels des zumindest einen, relativ zum Spannrad beweglichen, Abstandselements das Umreifungsband davon abgehalten werden kann, dass es in Anlage gegen die Oberfläche des Spannrads gelangt, wenn das Abstandselement seine Position einnimmt, in der es zumindest abschnittsweise über die Umfangsfläche des Spannrads übersteht.

In einer bevorzugten Ausführungsform der Erfindung kann vorgesehen sein, dass mit einer von aussen auf das Abstandselement des Spannrads aufgebrachten Kraft das Abstandselement zumindest abschnittsweise von der Position mit dem größeren radialen Abstand zur Drehachse in die andere Position mit dem geringeren radialen Abstand zur Drehachse überführbar ist. Unter "von aussen aufbringbar" kann hierbei insbesondere verstanden werden, dass die Kraft von einem nicht zum Spannrad oder dem Abstandselement selbst gehörenden Element aufgebracht wird, insbesondere vom Umreifungsband. Das Abstandselement kann in Bezug auf seine Positionsänderung bzw. der Änderung seiner geometrischen Form als passives Element ausgebildet sein. Da somit für die Erzeugung der Positions- oder Formänderung des Abstandselements bei solchen Ausführungsformen der Erfindung kein hierfür vorgesehener Antrieb des Spannrads erforderlich ist, kann das Spannrad trotz der Realisierung der erfindungsgemässen Funktion konstruktiv einfach ausgebildet sein.

Eine konstruktiv einfache und dennoch kompakte Ausführungsform der Erfindung kann vorsehen, dass das Abstandselement gemeinsam mit dem Spannrad rotierbar angeordnet ist. Das Abstandselement ist somit vorzugsweise rotationsfest mit dem Spannrand und damit gemeinsam mit dem Spannrad rotierbar angeordnet. Das zumindest eine Abstandselement kann vorzugsweise relativ zum Spannrad selbst beweglich sein, wobei Positionsänderungen des zumindest einen Abstandselements insbesondere während einer Rotation des Spannrads stattfinden kann und möglich sind.

Es kann vorzugsweise vorgesehen sein, dass das zumindest eine Abstandselement seine erste Position während der Bandrückzugsphase einnimmt, so dass während der Bandrückzugsphase das Umreifungsband gegen das zumindest eine Abstandselement des Spannrads und damit mit Abstand zur Umfangsfläche des Spannrads angeordnet ist. Das Band wird somit durch das Abstandselement idealerweise davon abgehalten, während der Bandrückzugsphase Kontakt mit der Umfangsfläche des Spannrads zu erhalten. Sofern ein solcher Kontakt nicht vollständig zu vermeiden ist, sollte dieser durch das Abstandselement jedoch zumindest so weit als möglich reduziert werden. Für die Spannphase bzw. den Spannvorgang kann in bevorzugten Ausführungsformen der Erfindung das zumindest eine Abstandselement hingegen mit zumindest einem seiner Abschnitte in seine zweite Position gebracht werden, in der es an den Stellen der Umfangsfläche, an denen das Spannrad vom Umreifungsband umschlungen wird, höchstens auf gleicher Höhe mit der Umfangsfläche oder tiefer angeordnet ist. Hierdurch gibt das Abstandselement die Umfangsfläche für den beim Spannvorgang erwünschten Kontakt mit der Umfangsfläche frei.

Das zumindest eine Abstandselement kann in unterschiedlichen Ausrichtungen gegenüber der Umfangsfläche angeordnet sein. Bevorzugt hierbei ist eine Ausrichtung des Abstandselements zumindest im wesentlichen parallel zur Umfangsrichtung der Umfangsfläche des Spannrads. Hierdurch kann mit besonders geringem konstruktiven Aufwand entlang des gesamten Umfangs des Spannrads die Funktion des Abstandselements sichergestellt werden. Es ist zudem besonders vorteilhaft, wenn das Abstandselement in Bezug auf die Breite der Umfangsfläche des Spannrads zumindest in etwa mittig angeordnet ist.

Als Abstandselement können sowohl passive als auch aktive Abstandselemente vorgesehen sein, um das zumindest eine Abstandselement in seine beiden Positionen zu überführen. Als aktive Elemente können solche verstanden werden, die selbstätig eine Positions- und oder Formänderung vornehmen, beispielsweise solche, die durch Einsatz von hydraulischer, pneumatischer oder unter Einsatz von elektrischer oder magnetischer Energie seibsterzeugte Positions- und/oder Formänderungen des Abstandselements vornehmen. Demgegenüber sind jedoch passive Abstandselemente bevorzugt, also Abstandselemente, denen von aussen eine Positions- und/oder Formänderung aufgezwungen wird, ohne dass das Abstandselement selbst hierzu etwas beiträgt. Eine Positions- oder Formänderung kann beispielsweise durch eine Gegenrolle erfolgen, die in Richtung auf das Spannrad eine Druckkraft ausübt und das Band gegen das Abstandselement drückt. Bei einer auf die Eigenschaften des Abstandselements abgestimmten entsprechend hohen Kraft, kann hierdurch der Bereich des Abstandelements mit einem geringeren Abstand zur Drehachse des Spannrads versehen werden, als im unbelasteten Zustand. Die Abstandsänderung kann dazu genutzt werden, dass im Bereich der Gegenrolle das Umreifungsband anstatt gegen das Abstandselement nun gegen die Umfangsfläche des Spannrads anliegt.

Besonders günstige Ausführungsformen der Erfindung sind insbesondere solche, bei denen keine Steuerung der Zeitpunkte erforderlich ist, zu denen Positionsänderungen des Abstandselements vorzunehmen sind. Eine besonders günstige Ausführungsform eines passiven Abstandelements kann deshalb vorsehen, dass die vom Band auf das Spannrad und damit auch auf das Abstandselement ausgeübten Kräfte selbst benutzt werden, um eine Positionsänderung vorzunehmen. Eine besonders vorteilhafte Ausführungsform kann hierbei vorsehen, dass die während der Bandrückzugsphase und der Spannphase unterschiedlich hohen Kräfte genutzt werden, um zu bestimmen, ob eine Positions- und/oder Formänderung eintreten soll. Ein Schaltvorgang ist hierzu nicht erforderlich, die Positions- und/oder Formänderung kann automatisch erfolgen und auch wieder rückgängig gemacht werden. Hierzu kann das Abstandselement derart ausgelegt sein, dass die während der Bandrückzugsphase ausgeübte Kraft des Bands auf das Spannrad nicht ausreicht, um das Abstandselement in seine zweite Position zu bringen. Die im Vergleich hierzu höheren Kräfte, die das Band während des Spannvorgangs auf das Spannrad ausübt, sind jedoch durch entsprechend geeignete Auslegung des Abstandselements geeignet, um letzteres in seine zweite Position zu überführen, in der dann ein Kontakt des Umreifungsbands mit der Umfangsfläche erfolgt. Bei dieser Ausführungsform muss weder zusätzliche Energie, noch eine Überwachung oder Steuerung des Vorgangs vorgenommen werden. Es ergibt sich somit eine konstruktiv unaufwendige aber dennoch funktionssichere Ausführungsform der Erfindung.

Eine besonders bevorzugte Ausführungsform der Erfindung kann sowohl eine in Richtung auf das Spannrad drückende Gegenrolle als auch die Nutzung des Bands zur Erzeugung der Positionsänderung vorsehen. Hierdurch kann eine besonders funktionssichere Erzielung der Positions- und/oder Formänderung des Abstandselements erzielt werden. Hierbei kann es von Vorteil sein, wenn insbesondere zu Beginn der Spannphase das Band mit einer Gegenrolle oder einem sonstigen geeigneten Element gegen das Abstandselement gedrückt wird und dadurch das Abstandselement zumindest im Bereich der Gegenrolle derart zurückgedrängt wird, dass das Band in Kontakt mit der Umfangsfläche gelangt. Damit kommt das Band in Eingriff mit dem Spannrad, wodurch begonnen werden kann, die Bandspannung zu erhöhen. Als Folge hiervon beginnt sich das Band mit einem zumindest im wesentlichen vorbestimmten Umschlingungswinkel entsprechend seiner vorgesehenen Bandführung um das Spannrad herum an das Abstandselement anzulegen. Durch Steigerung der Bandspannung kann dann auch die Druckkraft zu einer Grösse erhöht werden, die ausreichend ist, um das Abstandselement im Kontaktbereich mit dem Band derart zurückzudrängen, dass das Band über seinen Umschlingungswinkel am Spannrad mit dessen Umfangsfläche in Kontakt ist. Besonders vorteilhaft ist hierbei, wenn das Abstandelement soweit zurückgedrängt wird, dass das Abstandselement zumindest über einen Teil des Umschlingungswinkels, vorzugsweise zumindest im wesentlichen über den gesamten Umschlingungswinkel, nicht über den Kontaktbereich der Umfangsgfläche mit dem Band übersteht. Somit kann das Spannrad mit seiner nicht glatten Umfangsfläche auch bei weiter steigender Bandspannung in Eingriff bleiben und die Bandspannung kann bis zu einem vorgesehenen Wert erhöht werden.

In diesem Zusammenhang können unter "nicht gegenüber der Umfangsfläche überstehen" auch solche Anordnungen verstanden werden, bei denen das Abstandselement lediglich geringfügig gegenüber der Umfangsfläche übersteht und das Umreifungsband, beispielsweise aufgrund seiner Elastizität und Verformbarkeit trotz dieses geringen Überstands in Anlage gegen die Umfangsfläche gelangen kann.

Es ist ferner bevorzugt, dass das zumindest eine Abstandselement in einer Nut der Umfangsfläche angeordnet ist, wobei in der ersten Position des Abstandselements letzteres zumindest abschnittsweise einen größeren radialen Abstand zur Drehachse des Spannrads und in der zweiten Position das Abstandselement zumindest abschnittsweise höchstens den gleichen oder einen geringeren Abstand als die Umfangsfläche aufweist. In einer weiteren bevorzugten Ausführungsform der Erfindung kann die Umfangsfläche des Spannrads zumindest über eine Teillänge des Umfangs mit einer Nut versehen sein, in der als Bestandteil des Abstandelements ein Ringelement angeordnet sein kann, das zumindest abschnittsweise in unterschiedlichen Positionen anordenbar ist. Hierbei kann das Ringelement in vorteilhafter Weise in einer ersten Position angeordnet werden, in der er zumindest abschnittsweise gegenüber der Umfangsfläche erhaben und in einer zweiten Position, in welcher das Ringelement zumindest abschnittsweise nicht gegenüber der Umfangsfläche übersteht.

Eine bevorzugte Ausführungsform der Erfindung kann auch vorsehen, dass sich die Nut zumindest über eine Teillänge des Umfangs der Umfangsfläche, vorzugsweise über den gesamten Umfang, erstreckt und sich in der Nut ein als Ring oder als ein Ringsegment ausgebildetes Abstandselement befindet, wobei der Ring oder das Ringsegment am Umfang des Spannrads in Bezug auf seinen radialen Abstand zumindest abschnittsweise in unterschiedlichen Positionen anordenbar ist.

Grundsätzlich ist eine Vielzahl von unterschiedlichen Lösungen denkbar, durch die das Abstandselement, wie beispielsweise das Ringelement, das Umreifungsband von einem Kontakt mit der bewusst nicht glatt gehaltenen Oberfläche des Spannrads abhält. Eine besonders vorteilhafte Lösung kann vorsehen, dass das Ringelement sich im wesentlichen über den gesamten Umfang des Spannrads erstreckt und in einer sich über den Umfang des Spannrads erstreckenden Nut angeordnet ist. Das Ringelement kann in einer günstigen Weiterbildung der Erfindung bei Druckbelastung durch das Umreifungsband in die Nut drückbar sein, so dass aufgrund dieser Zurückdrängung des Ringelements entlang eines Umschlingungswinkel das Ringelement nicht mehr gegenüber der Umfangsfläche übersteht und das Umreifungsband gegen die Umfangsfläche des Spannrads in Anlage gelangen kann. Das Ringelement kann derart ausgelegt sein, dass es erst bei einer bestimmten auf das Ringelement einwirkenden Mindestkraft in der beschriebenen Weise in die Nut zurückgedrängt wird. Diese Mindestkraft kann derart vorbestimmt sein, dass sie zwar beim Spannvorgang aber nicht beim Bandrückzugsvorgang erreicht wird.

In einer weiteren besonders vorteilhaften Ausführungsform kann durch Nutzung von Federelastizität das Ringelement, oder andere Ausführungsformen des Abstandselements, bei einer entsprechenden Entlastung vom Banddruck, nach einer zuvor erfolgten Belastung, sofort und von selbst wieder zurückgestellt werden. Um dies zu erreichen, kann das Ringelement oder eine andere Ausführungsform des Abstandselements, selbst federelastisch ausgebildet sein. In weiteren Ausführungsformen kann zusätzlich zum gegebenenfalls zumindest im wesentlichen starren oder nicht ausreichen elastischen Abstandselement zumindest ein federelastisches Element vorgesehen sein, wie beispielsweise ein oder mehrere O-Ringe oder sonstige Federelemente, die auf das Abstandselement eine rückstellende Wirkung ausüben. Ausser einer hohen Funktionssicherheit, bieten auch diese Lösungen die Vermeidung der Zuführung von äusserer Energie.

Schliesslich ist eine weitere Ausführungsform der Spanneinrichtung bevorzugt, bei der während des Spannvorgangs das Spannrad rotiert und in Bezug auf ein ortsfestes Polarkoordinatensystem des Spannrads am zumindest im wesentlichen stets gleichen Umfangsabschnitt des Spannrads das Abstandselement in die Nut gedrückt wird, während das Abstandselement am verbleibenden Umfangsabschnitt, gegen den das Umreifungsband nicht anliegt, gegenüber der Umfangsfläche übersteht.

Die zuvor genannte Aufgabe wird zudem durch eine Umreifungseinrichtung gelöst, die mit einer der erfindungsgemässen Spanneinrichtungen versehen ist.

Eine weitere bevorzugte Ausführungsform der Erfindung - die auch unabhängig von der Anzahl der zur Aufbringung von Bewegungen auf das Band eingesetzten Rädern, Rollen und Motoren sowie von der Ausgestaltung des Spannrads selbständige Bedeutung haben kann - kann ein betätigbares Mittel vorsehen, mit dem zumindest ein Rad eines Räderpaars der Vorschubeinrichtung in einen Zustand schaltbar ist, in dem das Umreifungsband, ohne Übertragung einer entsprechenden motorischen Antriebsbewegung auf das Umreifungsband, in einer zur Bandvorschubbewegung entgegen gesetzten Richtung zwischen dem Räderpaar verschiebbar ist. Mit der Erfindung wird somit vorgesehen, den Zustand des Räderpaars von einem das Band zwischen sich klemmenden Zustand, der insbesondere den Bandvorschub ermöglicht, in einen Zustand zu verändern, in dem das Band sich unabhängig von einer angetriebenen Bewegung von einem Rad des Räderpaars, zwischen dem Räderpaar hindurchbewegen kann. Erfindungsgemäss wird der zur Übertragung einer motorischen Antriebsbewegung über eines der beiden Räder auf das Umreifungsband vorgesehene Klemmzustand zwischen dem Räderpaar zumindest insoweit reduziert, das zwischen dem Band und dem Räderpaar sich Schlupf oder ein vergrösserter Spalt einstellen kann. Sofern bei einer Aufhebung der Klemmwirkung ein vergrösserter Spalt zwischen den Umfangsflächen der Räder erzeugt wird, sollte dieser Spalt vorzugsweise grösser als die Banddicke sein. Die Klemmwirkung kann beispielsweise bereits dadurch reduziert werden, dass eine Druckkraft, mit der die beiden Räder gegeneinander gedrückt werden, reduziert wird, beispielsweise durch eine veränderbar einstellbare Grösse dieser Druckkraft. Eine solche Reduzierung der Klemmwirkung kann bereits ausreichend sein, damit sich ein Umreifungsband von sich aus zwischen dem Räderpaar bewegen kann.

Eine Möglichkeit zur Bewegung des Umreifungsbands zwischen den Rädern des Räderpaars kann aber alternativ auch dadurch erreicht werden, dass eine Wirkverbindung zwischen einem angetriebenen Rad und seinem Antrieb aufgehoben wird, so dass beide Räder des Räderpaars frei und ohne Haltemoment der Antriebseinrichtung drehbar sind. Eine solche Aufhebung einer Wirkverbindung kann beispielsweise mittels einer schaltbaren Kupplung im Antriebsstrang des angetriebenen Rads vorgenommen werden. Mit dieser schaltbaren Kupplung kann vorzugsweise auch die Wirkverbindung wieder hergestellt werden, um nachfolgend wieder eine Antriebsbewegung von der angetriebenen Rolle auf das Umreifungsband aufzubringen, insbesondere eine Bandrückzugsbewegung.

Durch eine freie Drehbarkeit des Räderpaars, oder zumindest Schlupf oder vorzugsweise einem ausreichend großen Spalt zwischen den Rädern, wird es dem Umreifungsband ermöglicht, überschüssige Bandlänge der Bandschlaufe unmittelbar nach oder bereits während der Entstehung der Bandschlaufe wieder zwischen dem Räderpaar hindurch abzubauen, wodurch eine Wellenbildung möglichst vermieden werden soll. Eine beginnende überschüssige Bandlänge im Umreifungskanal führt zu Stauchungen in der Bandschlaufe und damit zu Druck- und/oder Biegespannungen im Umreifungsband. Übliche Umreifungsbänder weisen eine Biegesteifigkeit auf, die solchen Bändern die Tendenz verleihen, Druck- und Biegespannungen dadurch abzubauen, dass sie sich in eine Möglichkeit ebene und geradlinig verlaufende Ausrichtung begeben. Dies wird durch die Erfindung in vorteilhafter Weise dadurch genutzt, dass durch die Schaffung einer Bewegungsmöglichkeit des Bandes zwischen dem Räderpaar hindurch, aufgrund der Bandselbstentspannung überschüssige Bandlänge sich insbesondere von alleine zwischen den Rädern wieder aus dem Bandkanal herausbewegen kann.

In einer bevorzugten Weiterbildung gemäss diesem weiteren Aspekt der Erfindung kann eine Umreifungeinrichtung, wie sie beispielsweise im Oberbegriff von Anspruch 1 beschrieben ist, bei welcher eine Vorschubbewegung des Bands zur Bandschlaufenbildung durch die Umreifungseinrichtung vorgesehen ist und hierbei das Band zwischen einer motorisch angetriebenen Rolle und einer Gegenrolle eingeklemmt wird, eine Lüfteinrichtung vorgesehen sein. Gemäss diesem Aspekt der Erfindung, kann bei einer Umreifungseinrichtung die Lüfteinrichtung zur Ausführung eines Lüftvorgangs zwischen der angetriebenen Rolle und ihrer Gegenrolle vorgesehen sein, durch den ein Abstand zwischen der angetriebenen Rolle und ihrer Gegenrolle erzeugt bzw. vergrössert und anschliessend wieder verkleinert wird. In diesem Zusammenhang kann deshalb unter "lüften" die Erzeugung eines Abstands verstanden werden. Vorzugsweise sind das Spannrad und die erste Rolle mit nur einem gemeinsamen Motor antreibbar. Die Umreifungseinrichtung ist also vorzugsweise durch eine Lüfteinrichtung gekennzeichnet, mit welcher zwischen einer als Gegenrolle vorgesehenen Rolle und einer zur Aufbringung einer Bandbewegung vorgesehenen motorisch angetriebenen Rolle ein im Vergleich zur Aufbringung von Bandbewegungen vergrösserter Abstand erzeugbar ist.

Mit dieser Massnahme gemäss dieses weiteren Aspekts der Erfindung, ist es besonders funktionssicher möglich, eine sich bisher nach Abschluss des Bandvorschubvorgangs bei hoher Bandvorschubgeschwindigkeit oftmals ergebende Wellenbildung in der Bandschlinge oder -schlaufe, insbesondere im Bereich einer Bandantriebseinrichtung der Umreifungseinrichtung, zumindest weitestgehend zu vermeiden, die zu Funktionsstörungen der Umreifungseinrichtung führen kann. Überschüssiges Band kann sich durch den aufgrund des Lüftvorgangs vergrösserten Spalt zwischen den beiden Rollen von alleine wieder in Richtung zum Bandvorrat bewegen. Eine solche Rückbewegung eines Bandabschnitts durch den vergrösserten Spalt zwischen den beiden Rollen hindurch, kann insbesondere aufgrund des im Band wegen des zuvor erfolgten Bandvorschubs vorhandenen Impulses bzw. der Bewegungsenergie und der Biegesteifigkeit des Bands von selbst erfolgen, ohne dass hierfür die Aufbringung einer entsprechenden motorisch erzeugten gleichgerichteten Antriebsbewegung auf das Band erforderlich wäre.

Mit Vorteil kann der Lüftvorgang zwischen den beiden Rollen vor dem mit motorischer Antriebsbewegung bewirkten Bandrückzugsvorgang wieder aufgehoben und die beiden Rollen wieder gegeneinander in Anlage gebracht werden. Der Lüftvorgang erfolgt somit vorzugsweise zeitlich zwischen dem Bandvorschub- und dem Bandrückzugsvorgang. Eine zeitliche Überschneidung zwischen dem Bandvorschub- und/oder dem Bandrückzugsvorgang einerseits sowie dem Lüftvorgang andererseits ist hierbei möglich, aber nicht erforderlich.

In einer weiteren vorteilhaften Ausgestaltung der Erfindung kann vorgesehen sein, dass mit der Lüfteinrichtung zwischen einem Bandvorschub- und einem Bandrückzugsvorgang eines Umreifungsvorgangs ein Abstand zwischen einer als Gegenrolle vorgesehenen Rolle und einer als Antriebsrolle für das Band vorgesehenen anderen Rolle, ein Abstand erzeugbar ist, der größer ist als die Dicke des Umreifungsbands.

In einer weiteren günstigen Ausgestaltung der Erfindung gemäss diesem Aspekt, kann die nicht motorisch angetriebene Gegenrolle auf einem drehbaren Exzenter angeordnet sein. Die Lüfteinrichtung kann hier auf den Exzenter einwirken, um durch Drehung des Exzenters und der Exzentrizität einen Spalt zwischen den beiden Rollen zu erzeugen, der grösser ist als die Banddicke. Nach Abschluss des Lüftvorgangs kann der Exzenter wieder in dann entgegen gesetzte Richtung zurückgedreht werden, wodurch die beiden Rollen wieder das Band zwischen sich einklemmen und mit den beiden Rollen nun ein Bandrückzugsvorgang erfolgen kann. Diese bevorzugte Ausführungsform der Erfindung hat unter anderem den Vorteil, dass mittels eines Exzenters mit vergleichsweise geringem erforderlichem Bauraum, eine schnelle Bewegung der Gegenrolle zur Erzeugung eines Abstands zur angetriebenen Rolle sowie wieder eine Zustellung zur angetriebenen Rolle möglich ist. In anderen Ausführungsformen der Erfindung kann der Abstand zwischen den beiden Rollen für den Lüftvorgang selbstverständlich auch auf andere Weise erfolgen, beispielsweise durch eine Schwenkbewegung oder eine lineare Bewegung von zumindest einer der beiden Rollen.

In einer weiteren zweckmässigen Ausgestaltung der Erfindung kann vorgesehen sein, dass die Lüftbewegung durch ein linear bewegbares angetriebenes Element, wie beispielweise ein Hubkolben, erfolgt. Derartige Hubelemente, sind in vielfacher Weise und mit unterschiedlichen Antriebsprinzipien verfügbar. Es lassen sich mit solchen die Antriebsbewegung besonders funktionssichere Lüfteinrichtungen bilden. Zudem ist es mit solchen Antriebselementen auch mit vergleichsweise geringem Aufwand möglich, bereits bestehende Umreifungsvorrichtungen mit einer Lüfteinrichtung nachzurüsten.

Weitere bevorzugte Ausgestaltungen der Erfindung ergeben sich aus den Ansprüchen, der Beschreibung und der Zeichnung. Der Offenbarungsgehalt der Patentansprüche wird hiermit durch Bezugnahme in die Beschreibung mit aufgenommen. Die Erfindung wird anhand von in den Figuren rein schematisch dargestellten Ausführungsbeispielen nachfolgend näher erläutert, es zeigen:
- Fig. 1: eine stark schematisierte Darstellung einer erfindungsgemässen Umreifungsvorrichtung, die mit einem erfindungsgemässen Umreifungskopf versehen ist;
- Fig. 2: eine perspektivische Darstellung eines erfindungsgemässen Umreifungskopfs;
- Fig. 3: eine perspektivische Darstellung von oben des in eine Bandführung einer Umreifungsvorrichtung integrierten Umreifungskopfs aus Fig. 2;
- Fig. 4: eine Seitenansicht auf den Umreifungskopf aus Fig. 2, bei dem sich eine Komponente in einer ausgeschwenkten Serviceposition befindet;
- Fig. 5: eine perspektivische Teildarstellung des Umreifungskopfs aus Fig. 2, mit einer Darstellung der Bandantriebseinrichtung;
- Fig. 6: eine Vorderansicht auf die Bandantriebseinrichtung aus Fig. 5;
- Fig. 7: eine perspektivische Darstellung eines erfindungsgemässen Spannrads mit einer Teildarstellung der Rändelung der Umfangsfläche des Spannrads;
- Fig. 8: eine Vorderansicht auf das Spannrad aus Fig. 7;
- Fig. 9: eine Querschnittsdarstellung des Spannrads entlang einer Durchmesserlinie;
- Fig. 10: eine Komponente eines Hebelgetriebes für eine Gegenrolle der Bandantriebseinrichtung;
- Fig. 11: eine weitere Komponente des Hebelgetriebes der Gegenrolle in einer perspektivischen Darstellung;
- Fig. 12: die Komponente aus Fig. 11 in einer Vorderansicht;
- Fig. 13: eine Schnittdarstellung der Komponente aus Fig. 11 und 12;
- Fig. 14: eine explosionsartige Darstellung eines weiteren bevorzugten Ausführungsbeispiels eines Spannrads;
- Fig. 15: eine perspektivische Darstellung des Spannrads aus Fig. 14;
- Fg. 16: eine Vorderansicht des Spannrads aus Fig. 14 und 15;
- Fig. 17: eine Schnittdarstellung des Spannrads aus Fig. 14-16;
- Fig. 18: ein weiteres Ausführungsbeispiel für eine erfindungsgemässe Bandantriebseinrichtung mit einer Lüfteinrichtung in einer Teildarstellung eines Umreifungskopfs;
- Fig. 19: die Bandantriebseinrichtung aus Fig. 18 in einer Darstellung, in der eine Gegenrolle von der mit ihr zusammenwirkenden angetriebenen Rolle gefüftet ist.

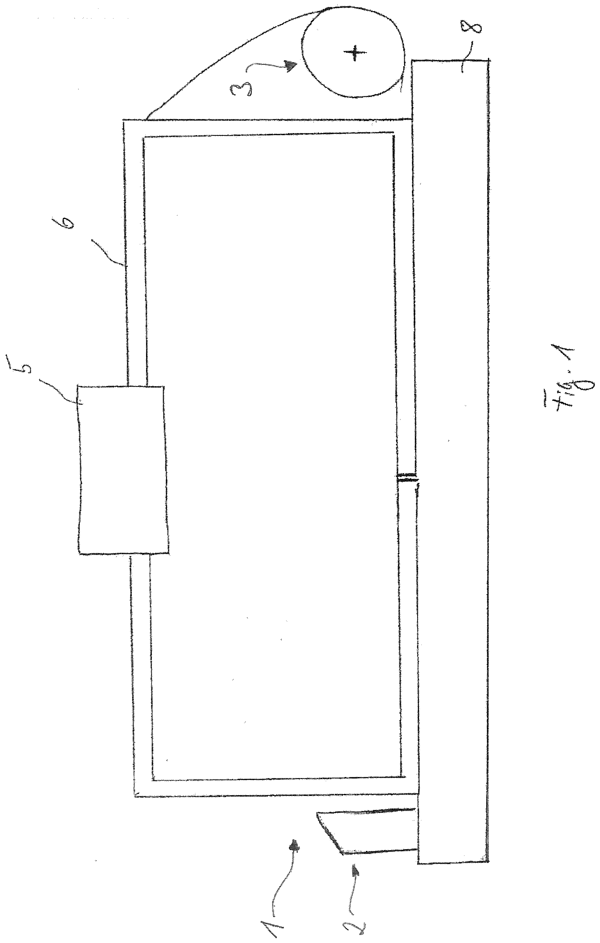

In Fig. 1 ist eine Umreifungsvorrichtung 1 gezeigt, die mit einer Steuerung 2, einer Vorratseinrichtung 3 zur Bevorratung und zum Verfügungsstellen eines Umreifungsbandes, sowie mit einem Umreifungskopf 5 versehen ist. Der Umreifungskopf 5 dient unter anderem zur Erzeugung einer Vorschub- sowie zur Erzeugung einer Rückzugsbewegung des Umreifungsbandes. Er ist ausserdem mit einer Spanneinrichtung, zur Aufbringung einer Bandspannung auf eine Bandschlaufe, sowie eine Verschlusseinrichtung zur Erzeugung eines Verschlusses am Umreifungsband, versehen. Zudem weist die Umreifungsvorrichtung eine Bandführung 6 auf, mit der das Band maschinell und automatisch auf einem vorgegebenen Weg um ein Packgut 7 gelegt werden kann. In den Umreifungskopf 5 ist zudem eine Schweiss- und Klemmeinheit 16 integriert. Bis auf den Umreifungskopf 5 handelt es sich hierbei um an sich bekannte Komponenten von Umreifungsvorrichtungen.

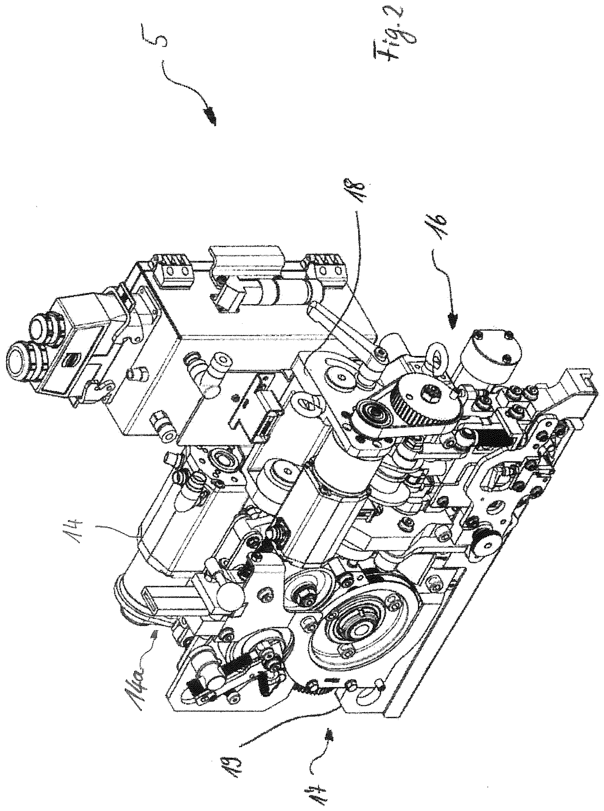

Der zusammen mit der Bandführung 6 auf einem Gestell 8 angeordnete und in Fig. 2 separat dargestellte Umreifungskopf 5 weist eine Bandantriebseinrichtung 15 auf. Bandantriebseinrichtungen sind grundsätzlich vorbekannt, weshalb nachfolgend im wesentlichen auf die Unterschiede zu vorbekannten Bandantriebseinrichtungen eingegangen wird. Die Bandantriebseinrichtung gemäss dieses Ausführungsbeispiels kann insbesondere mit einem oder mit mehreren Rollenpaaren 11, 12; 13 sowie eventuell mit weiteren einzelnen Umlenkrollen versehen sein. Letztere nehmen jedoch an der Erzeugung der Bandbewegung nicht teil und sind nur für die Bestimmung der Bandverlaufsrichtung vorgesehen. Von den im Ausführungsbeispiel drei Rollen 11, 12, 13, welche die Bandbewegungen erzeugen, sollte zumindest eine der Rollen 11, 12, 13 zur Erzeugung einer Bandvorschub- bzw. Bandrückschubbewegung motorisch angetrieben sein. Es sollte dabei vorzugsweise jeweils eine Rolle 11, 12, 13 der aus diesen Rollen gebildeten Rollenpaaren angetrieben sein, zwischen denen das Umreifungsband durchgeführt und dabei eine Vorschub-, Rückzugs- oder Spannbewegung sowie gegebenenfalls eine Entspananbewegung auf das Band übertragen wird.

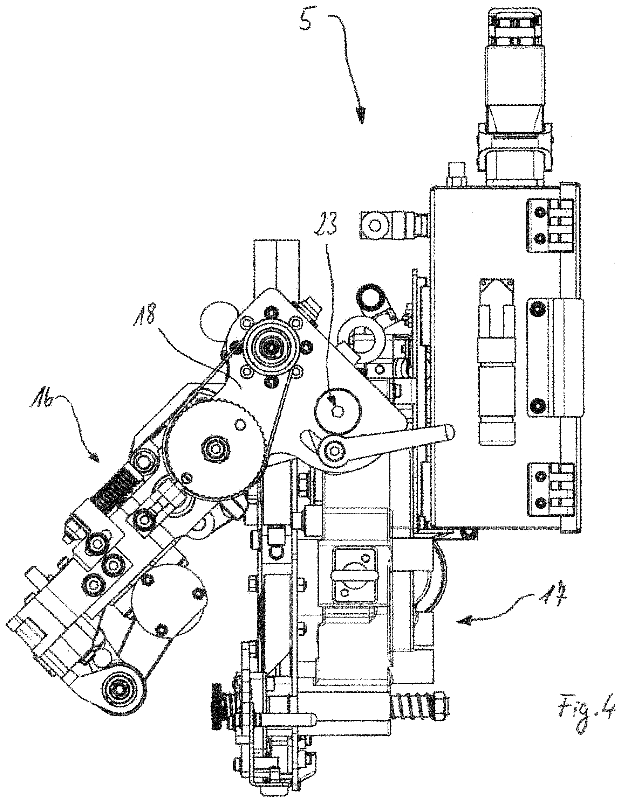

Der Umreifungskopf 5 weist zwei Komponenten auf, eine Steuerungskomponente 16 und eine Bandhandhabungskomponente 17. Im Ausführungsbeispiel hat die Steuerungskomponente 16 ausser der Ausführung von Steuerungsfunktionen für die Komponenten der Umreifungseinrichtung noch weitere Funktionen, beispielsweise die Erzeugung von Verschlüssen zwischen den zwei Bandlagen einer Umreifung sowie das Abtrennen des Umreifungsbands vom Bandvorrat. Die Steuerungskomponente 16 ist dabei auf einem Teilträger 18 des Umreifungskopfs montiert, wobei der Teilträger 18 wiederum an einem gemeinsamen Hauptträger 19 des Umreifungskopfs 5 lösbar befestigt ist. Wie insbesondere aus Fig. 4 hervorgeht, ist der Teilträger 18 der Steuerungskomponente 16 um eine Achse 23 schwenkbar. Die Elemente der Bandhandhabungskomponente 17 sind ohne eigenen Teilträger direkt am Hauptträger 19 des Umreifungskopfs befestigt. Im Ausführungsbeispiel ist die Steuerungskomponente 16 im wesentlichen zur Ausführung von Steuerungs- und Koordinierungsfunktionen der mit dem Umreifungskopf ausgeführten Funktionen vorgesehen. Die Bandhandhabungskomponente 17 und die an ihr angebrachten Komponenten sind hingegen zur unmittelbaren Einwirkung auf das Umreifungsband vorgesehen.

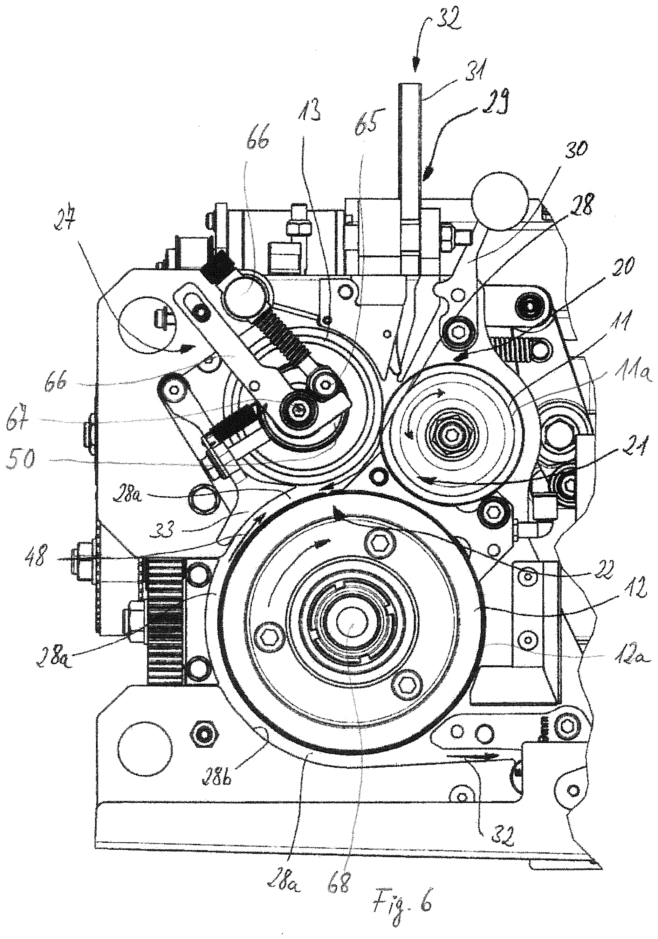

In die Bandhandhabungskomponente 17 des Umreifungskopfs 5 ist eine Bandvorschubeinrichtung 20, eine Bandrückzugseinrichtung 21 sowie eine Spanneinrichtung 22 integriert. Gemäss des hier gezeigten Ausführungsbeispiels sind für die Bandvorschub-, Bandrückzugs- und die Spanneinrichtung 20, 21, 22 gemeinsame Rollen 11, 12; 13 vorgesehen. Von den insgesamt nur drei Rollen 11, 12, 13 sind zwei Rollen 11, 12 motorisch angetriebene Rollen. Die beiden Rollen 11, 12 werden mit dem gleichen (nur einen) Motor 14, im Ausführungsbeispiel einem Elektromotor, angetrieben. Hierzu kann beispielsweise von dem gemeinsamen Motor 14 jeweils ein Antriebsstrang zu einer der beiden Rollen 11, 12 geführt sein. Die Rolle 11 ist hierbei sowohl als Antriebsrad für den Bandvorschub (Bandvorschubsrad) als auch als Antriebsrad für den Bandrückzug (Bandrückzugsrad) vorgesehen. Um im dargestellten Ausführungsbeispiel diese beiden Funktionen mit nur einem Rad ausführen zu können, ist die Rolle 11 mit dem gleichen Antriebsmotor 14 in beide Drehrichtungen antreibbar. In der Darstellung von Fig. 6 ist dabei die Drehrichtung entgegen des Uhrzeigersinns die Bandvorschubrichtung und die Drehrichtung im Uhrzeigersinn die Bandrückzugrichtung. Wie in Fig. 2 gezeigt ist, wird vom gemeinsamen Motor 14 mittels einer Getriebeeinrichtung die motorische Antriebsbewegung auf beide Räder bzw. Rollen 11, 12 übertragen. Im vorliegenden Ausführungsbeispiel umfasst die Getriebeeinrichtung 14a ein Zahnriemengetriebe, das die Antriebsbewegung von der Motorwelle auf eine zur Motorwelle parallel verlaufende weitere Welle überträgt. Auf dieser weiteren Welle sind zwei Zahnräder angeordnet, die je zu einem weiteren von zwei Teilgetrieben der Getriebeeinrichtung gehören. Von einem dieser beiden Teilgetrieben der Getriebeeinrichtung wird die motorische Antriebsbewegung auf die Rolle bzw. das Rad 11 und vom anderen Teilgetriebe auf das Spannrad 12 übertragen. Je nach Drehrichtung der Motorwelle drehen somit im Ausführungsbeispiel sowohl das Spannrad 12 als auch das Rad 11 in unterschiedliche Drehrichtungen.

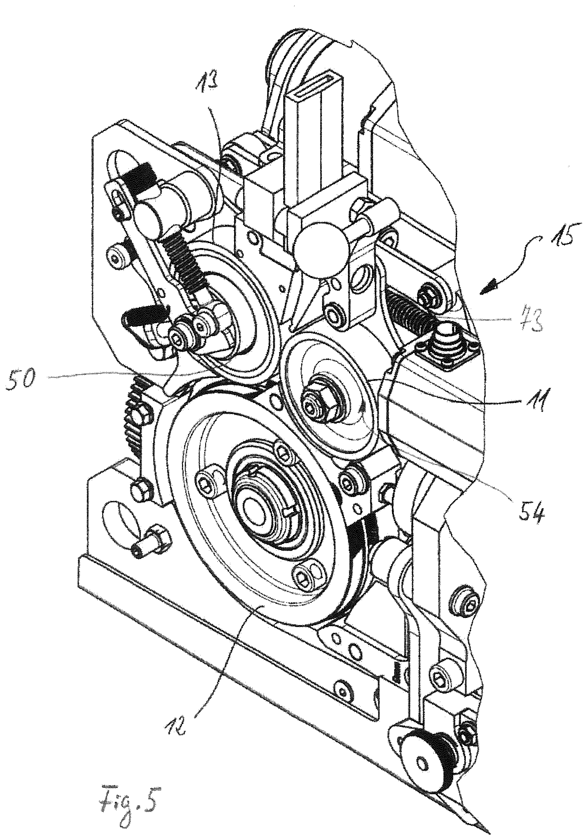

In der in Fig. 5, 6 wiedergegebenen Einbaulage des Umreifungskopfs ist die Rolle 11 oberhalb der Rolle 12 angeordnet. Die Rolle 12 ist Bestandteil der Spanneinrichtung 22 und hat die Funktion des Spannrads. Sie weist einen deutlich größeren Durchmesser als die Rolle 11 auf. Das Spannrad 12 ist aufgrund der starren Verbindung mit dem Motor 14 und der vom Motor ausgeführten Antriebsbewegungen in beiden Drehrichtungen, ebenfalls in beide Drehrichtungen antreibbar. Für die Aufbringung der vorgesehenen Bandspannung auf das Umreifungsband, insbesondere auf die Bandschlaufe, wird vom Spannrad jedoch nur die Antriebsbewegung in Spannrichtung genutzt, d.h. bezogen auf die Darstellung von Fig. 6 die Drehrichtung im Uhrzeigerrichtung. In bevorzugten Ausführungsformen kann durch eine dem Spannvorgang nachfolgende und zur Drehrichtung beim Spannvorgang entgegengesetzte Rotationsbewegung des Spannrads eine Entspannung des sich im Umreifungskopf befindlichen und nicht mehr zur Bandschlaufe gehörenden Bandabschnitts stattfinden. Die Antriebsbewegungen sowohl für die Spannbewegung als auch für die Entspannbewegung stammen vom gleichen Antriebsmotor wie für die Rolle 11. Als Alternative zum hier dargestellten Ausführungsbeispiel der Erfindung kann in anderen Ausführungsformen im nicht näher dargestellten Antriebsstrang vom Motor zu den beiden Rollen 11, 12 eine schaltbare Kupplung vorgesehen, mit der die Antriebsbewegung entweder auf die Rolle 11 oder die Rolle 12 geleitet werden kann. Neben Ausführungsformen in denen das Spannrad wiederum in beide Drehrichtungen antreibbar ist, kann auch vorgesehen sein, dass das Spannrad auch nur in die die für den Spannvorgang vorgesehene Drehrichtung antreibbar ist.

Wie der Darstellung von Fig. 6 zu entnehmen ist, ist die Rolle 13 sowohl zur Rolle 11 als auch zum Spannrad 12 benachbart. Die Rolle 13 ist rotativ nicht angetrieben und mittels einer Schwenkeinrichtung schwenkbar angelenkt. Die Schwenkeinrichtung ist mit einem Antrieb wirkverbunden, durch welche die Rolle (motorisch) angetriebene Schwenkbewegungen ausführen kann. Durch die Schwenkbewegung kann die als Gegenrolle fungierende Rolle 13 entweder in Anlage gegen die Rolle 11 oder in Anlage gegen das Spannrad 12 gebracht werden, wobei sich in der jeweiligen Endlage der schwenkbaren Rolle 13 jeweils das Umreifungsband zwischen einer der Rollen 11, 12 und der Rolle 13 befindet. Je nachdem, gegen welche der Rollen 11, 12 die Gegenrolle 13 anliegt, drückt die Gegenrolle 13 das Band dann an die entsprechende Rolle 11, 12, so dass die entsprechende Rolle 11, 12 ihre Rotationsbewegung möglichst schlupffrei als Vorschub-, Rückzug- oder Spannbewegung sowie gegebenenfalls als Entspannbewegung auf das Umreifungsband übertragen kann. Die Gegenrolle 13 ist somit zusammen mit der Rolle 11 sowohl Bestandteil der Bandvorschub- als auch Bestandteil der Bandrückzugseinrichtung. Zusammen mit dem Spannrad 12 ist die Gegenrolle 13 auch Bestandteil der Spanneinrichtung 22. Durch diese bevorzugte erfindungsgemässe Ausgestaltung kann die bisher bei vorbekannten Lösungen übliche vierte Rolle vermieden werden. Bei diesen vorbekannten Lösungen sind der Antriebsrolle und dem Spannrad jeweils eine von zwei Gegenrollen fest zugeordnet. Die bevorzugte erfindungsgemässe 3-Rollen Lösung kann demgegenüber eine deutlich kompaktere Ausgestaltung ermöglichen.

Die Rollen 11, 12, 13 sind im Umreifungskopf 5 zudem Bestandteil eines Bandführungskanals 28, durch den der Verlauf sowie der Vor- und Rückzugsweg des Bands vorbestimmt wird. Der Bandführungskanal 28 ist wiederum Teil der Bandführung 6. Wie in Fig.6 zu erkennen ist, weist der Umreifungskopf 5 eine erste Schnittstelle 29 auf, an der sich der Umreifungskopf 5 an die Vorratsrollenseite der Bandführung anschliesst. Das hier ausgebildete eine Ende des Bandführungskanals 28 ist als Schnellwechselschnittstelle ausgebildet. Diese weist ein mittels eines schwenkbaren Klemmhebels 30 an den Umreifungskopf klemmbares Kanalstück 31 auf, durch den das Band in den Umreifungskopf zugeführt wird. Das Kanalstück 31 endet unmittelbar vor der Umfangsfläche 11a der Rolle 11, so dass das Umreifungsband zumindest näherungsweise tangential zur Umfangsfläche 11a der Rolle 11 zugeführt werden kann. Befindet sich die die Rolle 13 in ihrer zur Rolle 11 geschwenkten Endposition, so wird das Band zwischen den Rollen 11, 13 hindurchgeführt, wobei die Rolle 13 das Band gegen die Rolle 11 drückt.

In Bandvorschubrichtung 32 gesehen, gelangt das Band im seinem weiteren Verlauf zum Spannrad 12. Hier ist von der Gegenrolle 13 ausgehend, durch geeignete Kanalbildungsmittel ein sich über ungefähr 180° am Umfang des Spannrads 12 erstreckender kreisbogenförmigen Kanalabschnitt 28a gebildet. In Bezug auf die Banddicke ist der Kanalabschnitt 28a deutlich breiter ausgebildet als die Banddicke. Die innere Begrenzung des Kanalabschnitts wird durch den sich jeweils im Bereich des Kanalabschnitts befindenden Abschnitt der Umfangsfläche 12a des Spannrads 12 gebildet. Die in radialer Sicht äussere Begrenzung des Kanalabschnitts 28a weist Führungsbleche sowie ein zusammen mit der Gegenrolle 13 schwenkbares äusseres Kanalsegment auf, mit dem sich der äussere Kanalabschnitt geschlossen halten lässt, obwohl sich die schwenkbare Gegenrolle 13 im Bereich des äusseren Kanalabschnitts befindet. Ohne das schwenkbare Kanalsegment 33 oder eines gleichwirkenden anderen Elements würde sich zumindest in einer der beiden Schwenkendpositionen der Gegenrolle 13 eventuell eine offene Stelle des Kanalabschnitts ergeben, die sich in Bezug auf eine sichere Bandführung möglicherweise negativ auswirken könnte.

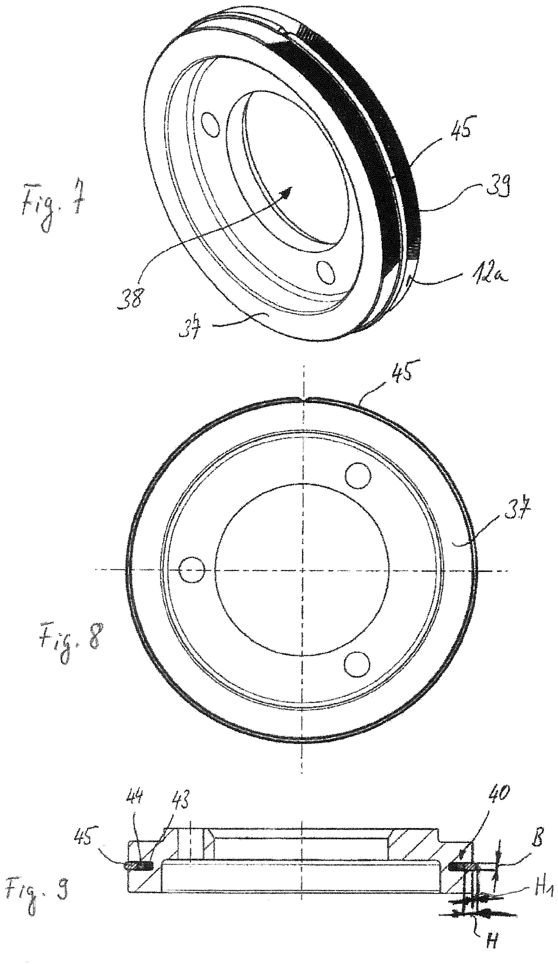

In den Fig. 7, 8, 9 ist das Spannrad in drei Darstellungen gezeigt. Dieses weist einen Ring 37 auf, der mit einer Ausnehmung 38 versehen ist, die zur Verbindung des Spannrads 12 mit einer Welle des Antriebs, insbesondere mit einer Welle eines Getriebes des Antriebs vorgesehen ist. In Fig. 2 ist das auf die Welle montierte Spannrad 12 gezeigt. Wie ebenfalls aus Fig. 6 hervorgeht, ist das kreisförmige Spannrad mit einer Umfangsfläche 12a mit zumindest im wesentlichen konstanter Breite versehen. Das Spannrad 12 ist an seiner Umfangsfläche 12a mit einer Rändelung oder Verzahnung 39 versehen, durch welche die Eingriffsverhältnisse des Spannrads 12 am Umreifungsband verbessert werden. Anstelle einer Rändelung oder Verzahnung 39 könnte auch jede andere geometrisch bestimmte oder unbestimmte Aufrauhung der Umfangsfläche 12a des Spannrads vorgesehen sein, mit der ein beim Spannvorgang möglicher Schlupf zwischen dem Spannrad und dem Umreifungsband zumindest weitestgehend verhindert werden kann.

Vorzugsweise zumindest in etwa mittig - in Bezug auf die Breite des Spannrads 12 - ist mit Abstand zu den seitlichen Rändern des Spannrads über den gesamten Umfang der Umfangsfläche 12a eine Nut 40 mit einer vergleichsweise geringen Breite eingebracht, die deutlich tiefer als breit ausgebildet ist. In der Nut 40 befinden sich im Ausführungsbeispiel zwei gummielastische O-Ringe 43, 44 übereinander, die in der Nut 40 radial hintereinander angeordnet sind. Hierbei ist einer der O-Ringe 43 mit einer geringeren und der andere O-Ringe 44 mit einem im Vergleich dazu grösseren Abstand zur Drehachse des Spannrads 12 angeordnet. Die Breite der O-Ringe 43, 44 ist dabei derart vorgesehen, dass sie in etwa der Breite der Nut 40 entsprechen. Die beiden O-Ringe 43, 44 befinden sich vollständig innerhalb der Nut 40. Beide O-Ringe 43, 44 sind aus gummielastischem Material gebildet.

Auf dem äusseren der beiden O-Ringe 43, 44 sitzt ein als Abstandselement vorgesehener Ring 45 auf, der im Ausführungsbeispiel aus einem metallischen Werkstoff gestaltet ist. Der Ring 45 ist in diesem Ausführungsbeispiel elastisch verformbar. Ebenso könnte der Ring im wesentlichen in sich starr oder formstabil ausgebildet sein. Um diese elastischen Eigenschaften des Rings zu erzielen, könnte der Ring 45 auch aus einem oder mehreren anderen Werkstoffen als einem metallischen Werkstoff gebildet sein, beispielsweise aus einem elastischen Kunststoff. Im Ausführungsbeispiel ist dieser Metallring 45 in Bezug auf seinen Querschnitt mit einer geringeren Breite B als Höhe H versehen. Die Höhe des O-Rings ist in Bezug auf die Nuttiefe und die Höhe der O-Ringe derart abgestimmt, dass der Ring mit einer Höhe H₁ aus der Nut 40 herausragt. Der Ring 45 steht damit in seinem in Fig. 9 gezeigten unbelasteten Zustand über die Umfangsfläche 12a des Spannrings 12 über, insbesondere über seinen gesamten Umfang bzw. über den gesamten Umfang des Spannrings 12.

Das Umreifungsband wird zu Beginn des Umreifungsvorgangs mit vorzugsweise hoher Geschwindigkeit vom Umreifungskopf 5 aus mit seinem freien Bandende voraus durch die Bandführung 6 geschoben. Hierzu befindet sich die Gegenrolle 13 in Anlage gegen die eine Seite des Bands. Das Band wird durch die Gegenrolle mit seiner anderen Seite gegen die motorisch angetriebene Rolle 11 gedrückt. Die rotatorische Antriebsbewegung der Rolle 11 in Vorschubrichtung wird hierdurch auf das Umreifungsband übertragen, was dessen Vorschubbewegung in Vorschubrichtung bewirkt. Das Band kommt hinter dem Auslaufbereich des Bands aus dem Spalt zwischen Rolle 11 und Gegenrolle 13 in Kontakt mit dem Spannrad 12, ohne aber auf das Spannrad 12 einen nennenswerten Druck auszuüben.

Nachdem das Band vollständig durch die Bandführung 6 durchgeschoben ist, erreicht das Bandende wieder den Verschlusskopf. Hier betätigt das Bandende einen Endschalter, wodurch die Vorschubbewegung gestoppt und das Bandende geklemmt wird. Diese sowie weitere Ein- und Ausschaltvorgänge von Komponenten des Verschlusskopfs werden durch die Steuerungskomponente 16 vorgenommen, die hierzu mit einer dem Grunde nach bekannten motorisch angetriebenen Nockenwellensteuerung versehen ist.

Nun setzt die Nockenwellensteuerung der Steuerungskomponente 16 die Rolle 11 in zur Vorschubrichtung umgekehrter Drehrichtung in Bewegung. Das weiterhin zwischen der Rolle 11 und der Gegenrolle 13 eingeklemmte Umreifungsband wird hierdurch in umgekehrter, also in Bandrückzugsrichtung 48, bewegt. Die Umfangslänge der Bandschlaufe, deren Bandende weiterhin eingeklemmt ist, wird hierdurch kontinuierlich verkürzt. Das Band wird hierdurch aus der Bandführung 6 gerissen und als Resultat davon um das jeweilige Packgut angelegt.

In Fig. 6 ist das Spannrad 12 während des Bandrückzugsvorgangs dargestellt. Wie dieser Darstellung zu entnehmen ist, gelangt während des Bandrückzugsvorgangs das Band in Anlage gegen das Spannrad 12. Das Umreifungsband liegt im wesenltichen über dem gesamten kreisbogenförmigen Kanalabschnitt 28a am Spannrad 12 an, ähnlich wie das auch beim erst nachfolgenden Spannvorgang der Fall ist. Das Band wird zwar hier zurückgezogen, aber aufgrund seiner Möglichkeit dieser Bewegung dadurch nachzugeben, dass es sich, wie vorgesehen, aus der Bandführung herausbewegt, wird während dieser Phase trotzdem nur eine vergleichweise geringe Bandspannung auf das Band der Bandschlaufe aufgebracht. Als Folge dieses Kontakts mit dem Spannrad 12 und des gegenüber der Umfangsfläche überstehenden Rings 45, liegt das Band nicht an der Umfangsfläche des Spannrads 12 sondern am sich in der Umfangsfläche 12a befindenden Ring 45 an. Dieser Kontakt mit dem im Ausführungsbeispiel hier als Ring 45 ausgebildeten Abstandselement führt dazu, dass das Band während des Bandrückzugs nicht durch die Rändelung oder Verzahnung 39 der Umfangsfläche 12a beschädigt werden kann.

Nachdem das Band durch den Bandrückzug an das Packgut angelegt ist, wird von der Steuerung von Bandrückzug auf Erzeugung einer Bandspannung umgeschaltet, wodurch das am Packgut anliegende Band stramm gezogen werden soll. Hierzu wird zunächst die Gegenrolle 13 von ihrer Anlageposition gegen die Rolle 11 in eine Anlageposition gegen das Spannrad 12 geschwenkt. Das in die gleiche Rotationsrichtung versetzte Spannrad 12 wie zuvor die Rolle 11, dreht mit geringerer Drehzahl aber dafür unter Einsatz eines grösseren Drehmoments und zieht weiter am Umreifungungsband. An die im Ausführungsbeispiel weiterhin angetriebene und sich schneller drehende Rolle 11 liegt aufgrund des fehlenden Drucks der Gegenrolle 13 das Band nun hingegen nicht mehr in einer Weise an, durch die die Rolle 11 ihre Bewegung auf das Band übertragen könnte. Da das Umreifungsband in diesem Stadium bereits gegen das Packgut anliegt, wird das Band durch das Spannrad 12 höchstens noch mit einer im Vergleich zur Bandrückzugsphase geringen Länge zurückgezogen. Während dieser Spannphase wird auf das Band vor allem eine grössere Bandspannung aufgebracht.

Bereits zu Beginn der Spannphase wird durch den Druck der Gegenrolle 13 in Richtung auf das Spannrad und das dazwischen befindliche Band, der Ring 45 in Richtung zum Nutgrund und damit auch in im wesentlichen radialer Richtung gesehen in Richtung auf die Drehachse des Spannrads 12 gedrückt. Hierdurch liegt bereits zu Beginn der Spannphase das Band gegen den Ring 45 an und drückt diesen ebenfalls zumindest im Bereich der Gegenrolle 13 in Richtung auf den Nutgrund. Der Ring 45 hat damit im Bereich der Gegenrolle 13 bereits zu Beginn des Spannvorgangs einen geringeren Abstand zur Drehachse des Spannrads als in seinem unbelasteten Zustand, beispielsweise während der Bandvorschub- oder der Bandrückzugsphase.

Das im weiteren Verlauf des Spannvorgangs vom Spannrad 12 auf das Band übertragene grössere Drehmoment im Vergleich zur Bandrückzugsphase der Rolle 11 hat eine größere Reaktionskraft des Bands zur Folge. Diese grössere Reaktionskraft führt nun dazu, dass das Band den Ring 45 nicht nur im Kontaktbereich mit der Gegenrolle 13, sondern über seine Kontaktlänge (Umschlingungswinkel, in Umfangsrichtung gesehen) mit dem Ring 45 in die Nut hineindrückt, wodurch das Band nun entlang seines Umschlingungswinkels am Spannrad 12 gegen dessen Umfangsfläche anliegt. Das Band drückt entlang seines Umschlingungswinkels am Spannrad den Ring gegen die Federkräfte der O-Ringe in die Nut hinein. In Abhängigkeit der Eigenschaften des Rings 45, verformt sich dieser hierdurch gegbenenfalls elastisch und kann entlang jenes Umfangsabschnitts, an dem das Umreifungsband nicht gegen das Spannrad anliegt, wieder teilweise (in Bezug auf seine Höhe) aus der Nut austreten. Ausserhalb des Umschlingungswinkels des Bands mit dem Spannrad, kann der Ring 45 hierbei in größerem Masse aus der Umfangsfläche hervorstehen, als im Vergleich zum unbelasteten Zustand, in dem er eine Höhe H₁ übersteht. Da der Ring rotationsfest in der Nut angeordnet ist, wird in Abhängigkeit der jeweiligen Rotationsposition des Spannrads 12, jede einzelne Stelle des Rings in alternierender Weise abwechselnd in die Nut 40 hineingedrückt und tritt wieder aus ihr heraus, bis sie aufgrund der Rotation des Spannrads wieder die Stelle erreicht, an der das Band einen Abschnitt der Umfangsfläche umschlingt und dadurch den Ring entlang dieses Abschnitts in die Nut hineindrückt. Somit kann trotz des vorhandenen Schutzes des Umreifungsbands vor einem Kontakt mit der Umfangsfläche des Spannrads während der Bandrückzugsphase trotzdem ein funktionssicherer Kontakt des Bands mit dem gleichen Spannrad während der Bandspannungsphase erreicht werden.

Die Gegenrolle 13 kann mit Vorteil mit unterschiedlichen Andruckkräften einerseits gegen die Rolle 11 (Vorschubrolle bzw. Rückzugsrolle) und andererseits gegen das Spannrad 12 gedrückt werden (im Einsatz der Umreifungseinrichtung jeweils mit dazwischenliegendem Umreifungsband). Im Vergleich zu den möglichen Andruckkräften gegen de Rolle 11 höhere Andruckkräfte gegen das Spannrad, können für eine hohe Funktionssicherheit und der Möglichkeit zur Aufbringung von hohen Bandspannungen auf das Umreifungsband von Vorteil sein. Nachfolgend wird deshalb erläutert, wie in einer bevorzugten Ausführungsform der Erfindung trotz der Schwenkbewegung der Gegenrolle 13 zwischen zwei Endpositionen in den Endposition unterschiedliche Andruckkräfte realisiert werden können.

Die Gegenrolle 13 ist hierzu auf einem Exzenter 50 angeordnet, der wiederum auf einer Welle 51 eines Trägers 52 angeordnet ist. Der Träger weist mit Abstand zur Welle 52 eine Aufnahme 53 auf, die zur Anordnung auf der Lagerstelle 54 der Rolle 11 vorgesehen ist (Fig. 5, 6). Die Aufnahme 53 ist hierbei um ihre Drehachse frei auf der Lagerstelle 54 der Rolle 11 drehbar und kann somit Schwenkbewegungen um ihre Drehachse ausführen.

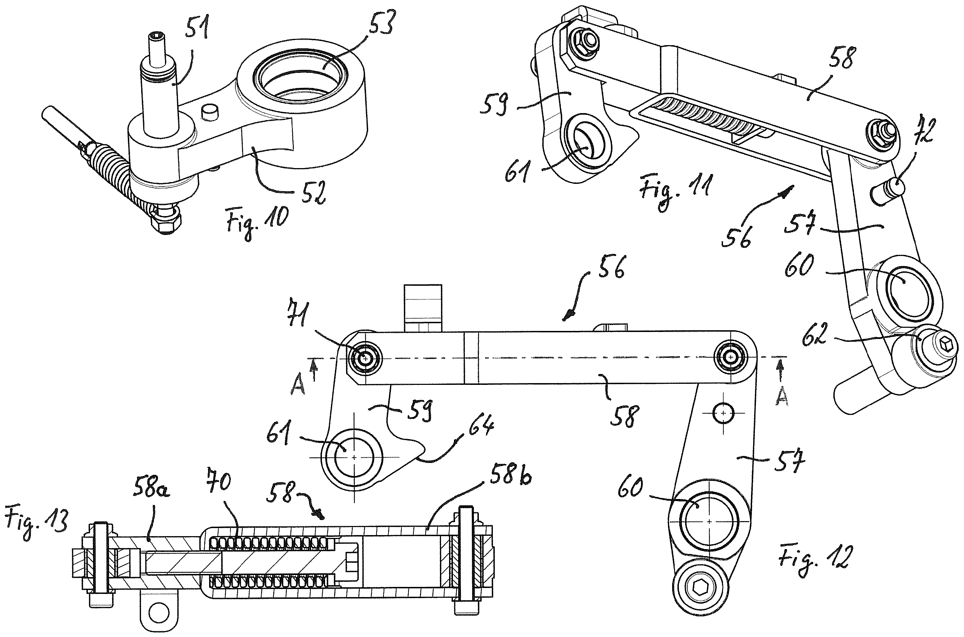

Im Bereich der Gegenrolle 13 und der Rolle 11 ist ein mehrere schwenkbar aneinander angelenkte Hebel 57, 58, 59 aufweisendes Parallelogramm vorgesehen. Das Parallelogramm 56 weist einen langen vertikalen Hebel 57, einen horizontalen Hebel 58 sowie einen kurzen vertikalen Hebel 59 auf. Das Parallelogramm ist am langen vertikalen Hebel 57 sowie am kurzen vertikalen Hebel 59 schwenkbar angelenkt. Die Hebel 57 sowie 59 weisen hierzu Schwenklagerstellen 60, 61 auf. Über eine Glockenkurve 62 kann auf den langen vertikalen Hebel 57 eine Rotationsbewegung übertragen werden, die zur Schwenkbewegung des Hebels 57 um seine Schwenkagerstelle 60 führt. In der Darstellung von Fig. 12 erfolgt die Schwenkbewegung des Hebels 57 im Uhrzeigersinn.

Der Hebel 58 zieht hierdurch an der Anlenkstelle des kurzen vertikalen Hebels letzteren auch in Richtung auf den Hebel 57 zu, wodurch sich der vertikale Hebel 59 in der Darstellung von Fig. 11, 12 ebenfalls im Uhrzeigersinn um seine Schwenklagerstelle 62 schwenkt. Eine am kurzen vertikalen Hebel 59 ausgebildete schräge Fläche 64 drückt hierdurch auf ein auf der Welle 51 angeordnetes Lager 51. Die schräge Fläche führt hierdurch eine Bewegung im Uhrzeigersinn (gemäß Darstellung von Fig. 12) aus und hat die Tendenz eine horizontale Ausrichtung einzunehmen. Hierdurch führt der Träger 52 eine Schwenkbewegung aus, wodurch die Gegenrolle 13 von ihrer Endposition gegen die Rolle 11 in Richtung auf das Spannrad 12 geschwenkt wird.

Bei Erreichen des Spannrads liegt die Gegenrolle gegen das Spannrad an und kann keine weitere Schwenkbewegung ausführen. Der Hebel 57 schwenkt jedoch weiter, wodurch die Lagerstelle 65 des Exzenters 50 im Gegenuhrzeigersinn in Richtung auf einen L-förmigen Träger 66 bewegt wird. Nachdem die Lagerstelle 65 gegen den L-förmigen Träger 65 drückt, stoppt die Bewegung der Lagerstelle 65 und diese befindet sich zumindest näherungsweise mit einer oberen Lagerstelle 66, der Rotationsachse 67 der Gegenrolle 13 sowie der Rotationsachse 68 des Spannrads 12 in einer Linie. Ein bisher die Andruckkraft der Gegenrolle 13 erzeugendes Federelement ist hierdurch nicht mehr wirksam.

Eine weitere Bewegung des Hebels 57 bei seiner Schwenkbewegung führt nun dazu, dass auch der Hebel 59 keine Bewegung mehr ausführen kann und deshalb zwei Teile 58a und 58b des horizontalen Hebels 58 auseinander gezogen werden. Ein sich zwischen den beiden Teilen 58a, 58b des Hebels angeordnetes Federelement 70 wird hierdurch komprimiert, wodurch dessen Federkraft steigt. Dies führt zu einem Drehmoment des Hebels 59 um die Schwenklagerstelle 61 mit dem Hebelarm des Abstands der Schwenklagerstelle 61 von der Anlenkstelle 71 des Hebels 58 am Hebel 59. In der Folge drückt die schräge Fläche 64 in Form eines Drehmoments um die Schwenklagerstelle 61 auf das Lager, was nun zu einer Andrückkraft der Rolle 13 gegen das Spannrad führt. Durch ein entsprechend dimensioniertes und ausgelegtes Federelement 70 sowie entsprechender Hebelverhältnisse können hierdurch hohe Andrückkräfte der Rolle 13 gegen das Spannrad erreicht werden.

Eine Rückstellung des Parallelogramms kann durch eine am Zapfen 72 des Hebels 5 angeordnete weitere Feder 73 erfolgen.

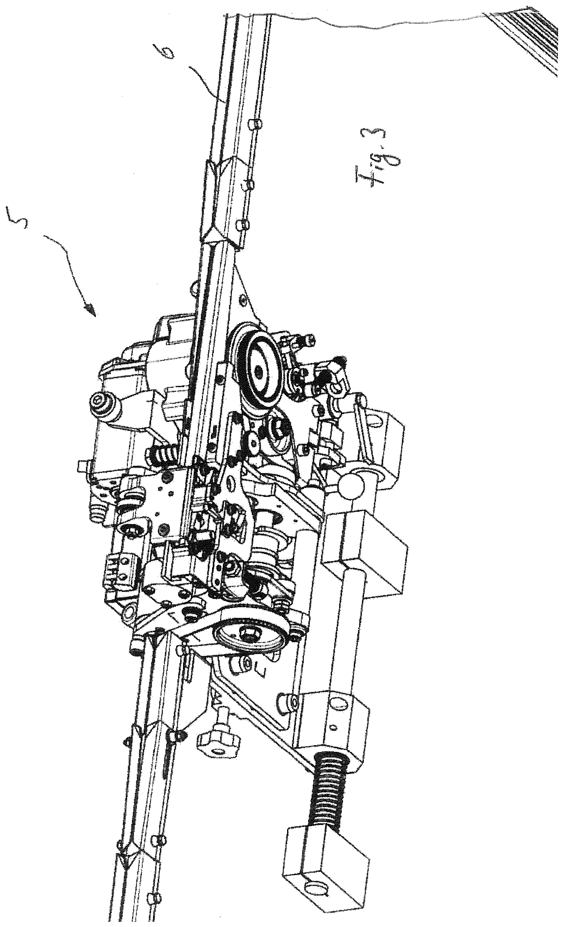

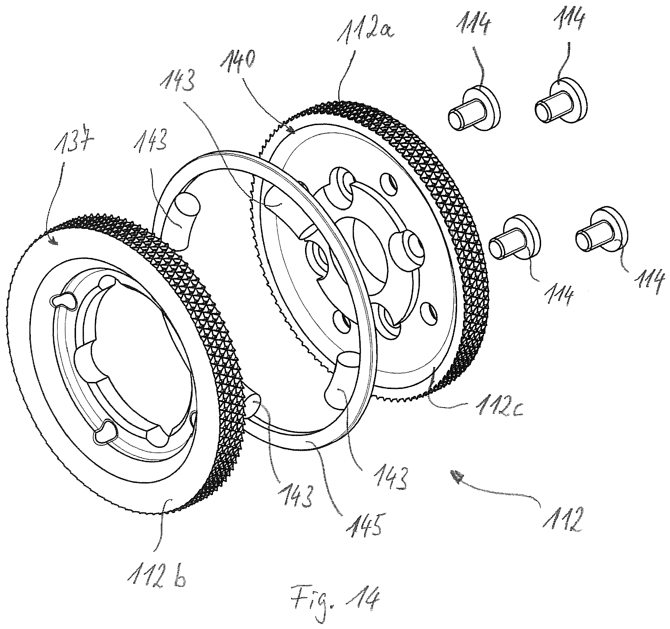

Nachfolgend werden alternative Ausführungsformen von vorstehend erörterten Bauteilen und Baugruppen beschrieben. Es wird hierbei im Wesentlichen lediglich auf Unterschiede zu den entsprechenden Bauteilen aus den Fig. 1 bis 13 eingegangen. Soweit bei diesen Ausführungsformen identische oder ähnliche Ausgestaltungen wie bei dem Ausführungsbeispiel der Fig. 1 bis 13 gegeben, wird darauf nachfolgend nicht näher eingegangen, der Offenbarungsgehalt der Ausführungsbeispiele der Fig. 1 bis 13 wird jedoch durch Bezugnahme auch für die Ausführungsbeispiele der Fig. 14 bis - 19 aufgenommen.

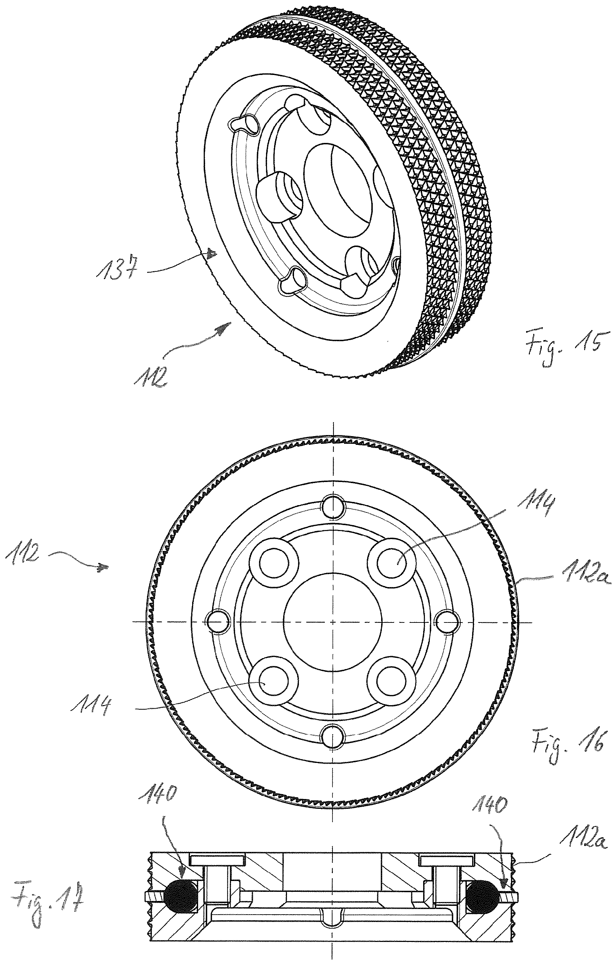

In Fig. 14, 15, 16 und 17 ist eine weitere bevorzugte Ausführungsform eines erfindungsgemässen Spannrads 112 dargestellt. Das Spannrad 112 kann in Bezug auf seine Breite, vorzugsweise etwa in der Mitte längsgeteilt sein, wobei die beiden Teile 112b, 112c des Spannrads 112 mittels geeigneten Befestigungselementen, beispielsweise Schrauben 114, lösbar miteinander verbindbar sind. Im Bereich dieser Teilungsebene, die nicht eben verlaufen muss, ist im äusseren Ring 137 des Spannrads 112 eine umlaufende Nut 140 ausgebildet, die zur Umfangsfläche 112a des Spannrads 112 hin offen ist und sich in Richtung zu dieser verjüngt bzw. verkleinert ist.

In der Nut 140 können ein oder mehrere Rückstellelemente angeordnet sein. Im Ausführungsbeispiel sind als Rückstellelement elastische Ringabschnitte 143, beispielsweise mehrere gummielastische O-Ringabschnitte 143, angeordnet. Vorzugsweise sind diese Ringabschnitte mit Abstand zueinander gleichmässig in der Nut 140 verteilt, wie dies im Ausführungsbeispiel mit insgesamt vier Ringabschnitten 143 der Fall ist. Die Rückstellelemente 143 befinden sich unterhalb von einem oder mehreren Abstandselementen. Im Ausführungsbeispiel ist lediglich ein als in sich geschlossener Ring ausgebildetes Abstandselement 145 vorgesehen. Ein Aussendurchmesser des in der Nut angeordneten Rings 145 ist dabei so bemessen, dass im unbelasteten Zustand des Rings 145 dieser mit seiner äusseren Umfangsfläche über die Umfangsfläche 112a des Spannrings 112 übersteht. Mit seiner inneren Umfangsfläche befindet sich der Ring 145 in der Nut. Die Rückstellelemente sind an der inneren Umfangsfläche des kreisförmigen und im wesentlichen formstabilen Rings 145 angebracht. In anderen Ausführungsformen kann auch eine andere Anzahl an Abstandselementen sowie eine andere Anzahl von Rückstellelementen vorgesehen sein.

Durch Anlage eines Umreifungsbands gegen den Ring 145 und durch Ausübung einer bestimmten Mindestdruckkraft auf den Ring entlang eines bestimmten Winkelbereichs entlang eine Abschnitts des Umfangs des Spannrads durch das Umreifungsband, kann in etwa der entlang dieses Winkelbereichs über die Nut hinausragende Abschnitt des Rings 145 in die Nut 140 hineingedrückt werden, so dass in diesem ortsfesten Winkelbereich des Spannrads 112, das Umreifungsband in Anlage gegen die Umfangsfläche 112a des Spannrads 112 gelangt und von der Umfangsfläche 112a bei der Bewegung des Spannrads 112 mitgenommen werden kann. Der im Ausführungsbeispiel durch die erwarteten auf ihn einwirkenden Kräfte im wesentlichen nicht verformbare und somit formstabile Ring 145 wird bei diesem Vorgang somit in Bezug auf die Drehachse des Spannrads leicht exzentrisch angeordnet. Der Ring 145 ragt hierdurch mit seinem vom Umschlingungswinkel des Bands nicht erfassten Abschnitt weiter aus der Nut 140 heraus, als im vom Umreifungsband unbelasteten Zustand des Spannrads. Durch Entlastung des Rings 145 vom Umreifungsband oder bei nicht ausreichend grosser Druckkraft auf den Ring 145 durch das Umreifungsband, können nach Abschluss des Spannvorgangs die elastischen Rückstellkräfte von einem oder mehreren der Ringaschnitte 143 den Ring 145 wieder über seinen gesamten Umfang aus der Nut herausragen lassen.

Durch diese bevorzugte Anordnung kann während des Spannvorgangs, während dem das Umreifungsband eine ausreichend hohe Druckkraft auf den sich im Umschlingungsbereich des Umreifungsbands befindenden Ring 145 ausübt, der Ring 145 abschnittsweise in die Nut 140 hineingedrückt werden. Während des Rückzugsvorgangs, während dem nur eine vergleichsweise geringe Zugspannung im Umreifungsband vorhanden ist, ist die Druckkraft auf den im Umschlingungsbereich des Bands momentan angeordneten Abschnitt des Rings 145 nicht ausreichend gross, um diesen Ringabschnitt vollständig in die Nut 140 hineinzudrücken. Das Band liegt hierdurch gegen den Abschnitt des Rings 145 und nicht gegen die Oberfläche des Spannrads 112 an. Der Ring 145 hält das Umreifungsband mit Abstand zur Umfangsfläche des Spannrads 112.

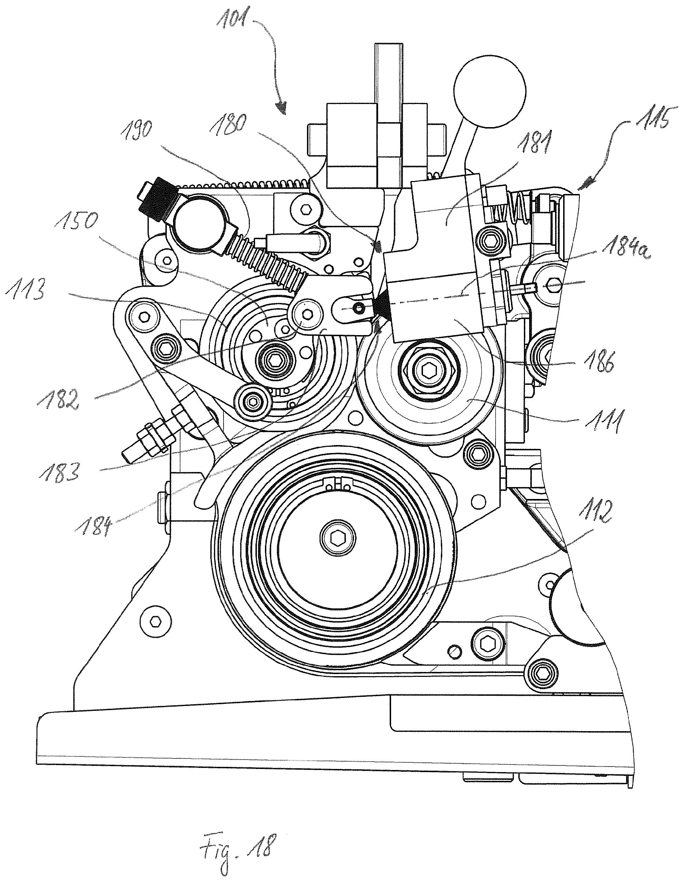

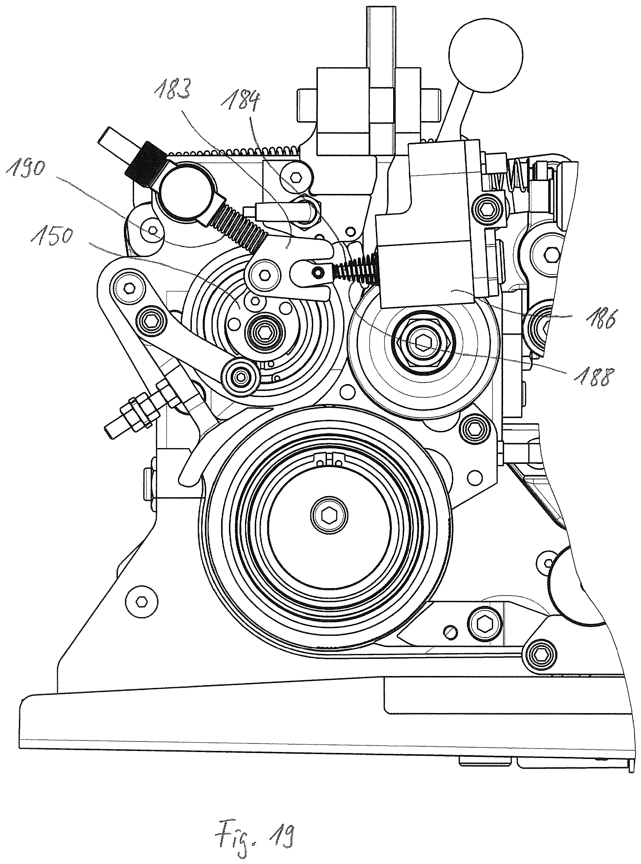

In den Fig. 18, 19 ist ein weiteres Ausführungsbeispiel für eine Bandantriebseinrichtung 115 dargestellt. Auch diese weist lediglich drei Rollen 111, 112, 113 auf, die für die Aufbringung der Bandvorschub-, Bandrückzugs- sowie die Bandspannungsbewegung auf das Band durch Kontakt mit dem Band verantwortlich sind, wobei die beiden Rollen 111 und 112 mittels eines Motors, insbesondere mittels nur eines gemeinsamen Motors, antreibbar sind. Die relative Anordnung der Drehachsen der drei Rollen 111, 112, 113 zueinander, entspricht zumindest in etwa der Anordnung dieser Drehachsen im Ausführungsbeispiel von Fig. 5 und 6.

Die Gegenrolle 113 ist wiederum schwenkbar ausgebildet, so dass sie in einer Schwenkposition zum Andruck des Umreifungsbands gegen die Rolle 111 und in einer anderen Schwenkposition zum Andruck des Umreifungsbands gegen die Spannrolle 112 vorgesehen ist. Der hierfür vorgesehene Schwenkmechanismus der Gegenrolle 113 und dessen Antrieb kann in prinzipiell gleicher Weise wie bei dem Ausführungsbeispiel der Fig. 1 bis 13 ausgebildet sein. Die Gegenrolle 113 ist wie im Ausführungsbeispiel von Fig. 5 und 6 auf einem Exzenter 150 drehbar gelagert, so dass die Gegenrolle 113 bei einer Schwenkbewegung von einer der Rollen 111, 112 zur jeweils anderen Rolle 111, 112 eine nicht kreisbogenförmige Bewegung ausführt. Wie in den Fig. 18 und 19 gezeigt ist, ist am Exzenter 150 der Gegenrolle 113 eine Lüfteinrichtung 180 gelagert, wobei die Lüfteinrichtung 180 sich mit einem Träger 181 am Gestell der Umreifungsvorrichtung 101 abstützt. Die Lagerstelle 182 der Lüftungseinrichtung am Exzenter 150 ist selbst schwenkbar am Exzenter angeordnet und ist als C- oder gabelförmiges Element 183 ausgebildet, um hierdurch eine Aufnahme für ein Ende eines Kolbens 184 auszubilden. Dieser Kolben 184 ist im Träger 181 der Lüftungseinrichtung 180 verschiebbar angeordnet. Die Abstützstelle befindet sich in der Darstellung von Fig. 18 und 19 unmittelbar oberhalb der Rolle 111. Der Träger 181 der Lüftungseinrichtung ist hierbei ebenfalls schwenkbar gelagert.

Im gezeigten Ausführungsbeispiel ist die Lüfteinrichtung 180 mit einem Lüftelement versehen, das dazu vorgesehen ist, eine gesteuerte Bewegung auszuführen, mit der auf die Gegenrolle 113 eingewirkt wird, um die Gegenrolle 113 in ihrer Schwenkposition an der Rolle 111 zu lüften bzw. geringfügig abzuheben. Vorzugsweise soll die Gegenrolle 113 in ihrer Schwenkposition bei der Rolle 111 auch nach einer Lüftung wieder an die Rolle 111 angestellt werden können, beispielsweise ebenfalls mittels der Lüfteinrichtung. Im Ausführungsbeispiel ist das Lüftelement als Hubmagnet 186 ausgebildet, der an der Lüftungseinrichtung 180 angeordnet und gelagert ist. Der Hubmagnet 186 kann mit seinem Kolben 184 eine lineare Hubbewegung entlang der Längsachse 184a seines Kolbens 184 ausführen. Wie in Fig. 18, 19 gezeigt ist, ist ein Ende des Kolbens 184 in der zum Träger 181 hin offenen Ausnehmung des C- oder gabelförmigen Elements 183 angeordnet. Das Ende des Kolbens 184 sowie die Ausnehmung des C-förmigen Elements können dabei derart gestaltet sein, dass sich bei der Lüftungsbewegung das Ende des Kolbens 184 im C-förmigen Element relativ zu diesem bewegen kann.

Die verlängerte Längsachse184a des Kolbens 184 verläuft hierbei zumindest in etwa durch die Anlenkstelle des C-förmigen Elements 183. Eine Hubbewegung des Kolbens 184 in Richtung auf die Gegenrolle 113 führt somit zu einer Drehbewegung des Exzenters um dessen Drehachse. In der Darstellung von Fig. 18 erfolgt die Drehbewegung im Gegenuhrzeigerinn, wie dies durch Vergleich der beiden Fig. 18 und 19 festgestellt werden kann. Die Rotationsbewegung des Exzenters 150 wiederum führt dazu, dass die Drehachse der Gegenrolle 113 parallelverschoben wird und sich zwischen der Rolle 111 und der Gegenrolle 113 ein Spalt bzw. ein vergrößerter Spalt ergibt. Die Breite des Spalts sollte hierbei eine Grösse aufweisen, die größer ist als die Dicke des jeweils verarbeiteten Umreifungsbands. Als Hubmagnet kann beispielsweise das Produkt GKb-32.06 des Unternehmens Isliker Magnete AG, CH-8450 Andelfingen, zum Einsatz kommen.

Auf dem Kolben 184 kann ein mechanisches Federelement angeordnet sein, insbesondere zumindest eine Druckfeder 188. Diese Druckfeder 188 wird bei der Bewegung der Gegenrolle 113 von der Spannrolle 112 zur Anlage gegen die Rolle 111 gestaucht und damit federelastisch gespannt. Der elektrisch betätigbare magnetische Hubkolben ist in dieser Phase ausgeschaltet und hat hierdurch keine Wirkung. Bei der Hubbewegung wird die Druckfeder 188 zumindest teilweise entspannt und die Federkraft wirkt unterstützend zu der vom Hubmagnet ausgeübten Kraft, mit welcher der Kolben 184 für die Lüftung der Gegenrolle 113 von der Rolle 111 bewegt wird. In anderen Ausführungsbeispielen, in denen der Hubmagnet oder ein anderes Rückstellelement alleine eine für den Lüftungsvorgang ausreichend hohe Kraft bereitstellt.

Bei der Erzeugung der Umreifung wird - wie bereits beschrieben - mittels der Rolle 111 und der gegen sie anliegende und das Band zwischen den beiden Rollen einklemmende Gegenrolle 113, das Band durch den Bandführungskanal 28 in Zuführrichtung bewegt. Bei Erreichen des Bereichs des Endes des Bandführungskanals, wie er beispielsweise in Fig. 1 in stark schematisierter Weise dargestellt ist, durch das Umreifungsband, trifft das Band auf einen Anschlag oder das Erreichen des Endes des Bandführungskanals kann auf andere Weise detektiert werden, beispielsweise durch eine Lichtschranke. Hierdurch wird ein Signal erzeugt, durch das die Steuerung der Umreifungsvorrichtung die motorische Antriebsbewegung der Rolle 111 stoppt und - zumindest im wesentlichen zeitgleich - die Hubbewegung des Kolbens 184 des Hubmagneten auslöst. In anderen Ausführungsformen der Erfindung ist es auch denkbar, dass der Stopp der Antriebsbewegung der Rolle 111 und der Beginn des Lüftungsvorgangs zeitlich zueinander versetzt sind, der Stopp der Antriebsbewegung also vor oder nach dem Beginn des Lüftvorgangs erfolgt.

Als Folge des Starts des Lüftvorgangs fährt der Kolben 184 in Richtung auf das C-förmige Element 183 aus und wirkt hierbei mit seinem Ende auf das C- oder gabelförmige Element ein. Aufgrund seiner Anordnung am Exzenter 150 wird der Exzenter bei der Hubbewegung des Kolbens gedreht. Im Ausführungsbeispiel und in der Darstellung von Fig. 18 erfolgt die Drehbewegung des Exzenters um einen Drehwinkel kleiner 90° in Gegenuhrzeigerrichtung. Die Drehbewegung erfolgt gegen die Federkraft der Andruckfeder 190, die hierbei gestaucht wird und ebenfalls am Exzenter 150 angelenkt ist. Als Folge der Drehbewegung wird die Gegenrolle 113 von der Rolle 111 gelüftet, d.h. angehoben und der Abstand zwischen den beiden Rollen 111, 113 vergrössert, so dass ein Spalt zwischen den Rollen entsteht, der grösser ist als die Banddicke.

Das mit hoher Geschwindigkeit durch den Bandkanal der Bandführung 6 geschossene Umreifungsband hat bei gattungsgemässen Umreifungsvorrichtungen durch den plötzlichen und abrupten Bandstopp die Tendenz zwischen den Rollen 111, 112, 113 und dem Ende des Umreifungskanals Wellen zu bilden. Insbesondere im Bereich der Rollen 111, 112, 113 können solche Wellen zu Funktionsstörungen führen. Durch die bevorzugte erfindungsgemässe Ausführungsform, bei der die Gegenrolle 113 gelüftet wird, kann das Band insbesondere unmittelbar nach dem Stopp des Vorschubs sich soweit als erforderlich und frei wieder entgegen der Vorschubrichtung in Richtung auf den Bandvorrat bewegen, damit sich der für die Länge des Bandkanals möglicherweise überschüssige und die Wellenbildung bewirkende Bandanteil im Bandführungskanal zurückbewegen kann. Die Steuerung der Umreifungsvorrichtung kann dann anschliessend den Hubmagneten wieder abschalten. Der Hubmagnet verliert hierdurch seine Wirkung, wodurch die Andruckfeder 190 den Exzenter 150 entgegen der Drehrichtung zuvor wieder zurückbewegen kann und damit die Gegenrolle 113 wieder in Anlageposition gegen das Band bringt, in der das Band zwischen der Rolle 111 und der Gegenrolle 113 eingeklemmt ist. Der anschliessende Bandrückzugs- sowie Spannvorgang kann in gleicher Weise wie bei den Ausführungformen der Erfindung gemäss den Fig. 1 bis 13 erfolgen.

**Bezugszeichenliste**

| | | | |
|---|---|---|---|
| 1 | Umreifungsvorrichtung | 37 | Ring |
| 2 | Steuerung | 38 | Ausnehmung |
| 3 | Vorratseinrichtung | 39 | Rändelung/Verzahnung |
| 5 | Umreifungskopf | 40 | Nut |
| 6 | Bandführung | 43 | O-Ring |
| 8 | Gestell | 44 | O-Ring |
| 11 | Rolle | 45 | Ring |
| 11a | Umfangsfläche | 48 | Bandrückzugsrichtung |
| 12 | Spannrad | 50 | Exzenter |
| 12a | Umfangsfläche Spannrad | 51 | Welle |
| 13 | Gegenrolle | 52 | Träger |
| 14 | Motor | 53 | Aufnahme |
| 14a | Getriebeeinrichtung | 54 | Lagerstelle |
| 15 | Bandantriebseinrichtung | 56 | Parallelogramm |
| 16 | Steuerungskomponente | 57 | langer vertikaler Hebel |
| 17 | Bandhandhabungskomponente | 58 | horizontaler Hebel |
| 18 | Teilträger | 59 | kurzer vertikaler Hebel |
| 19 | Hauptträger | 60 | Schwenklagerstelle |
| 20 | Bandvorschubeinrichtung | 61 | Schwenklagerstelle |
| 21 | Bandrückzugseinrichtung | 64 | schräge Fläche |
| 22 | Spanneinrichtung | 65 | Lagerstelle |
| 23 | Achse | 66 | Träger |
| 27 | Schwenkeinrichtung | 67 | Rotationsachse |
| 28 | Bandführungskanals | 68 | Rrotationsachse |
| 28a | Kanalabschnitt | 70 | Federelement |
| 28b | äussere Begrenzung | 71 | Anlenkstelle |
| 29 | Schnittstelle | 72 | Zapfen |
| 30 | Klemmhebel | | |
| 31 | Kanalstück | 101 | Umreifungsvorrichtung |
| 32 | Bandvorschubrichtung | 111 | Rolle |
| 33 | äusseres Kanalsegment | 112 | Spannrad |
| 112a | Umfangsfläche | 184 | Kolben |
| 112b | Teil | 184a | Achse |
| 112c | Teil | 186 | Hubmagnet |
| 113 | Gegenrolle | 188 | Druckfeder |
| 114 | Schraube | 190 | Andruckfeder |
| 115 | Bandantriebseinrichtung | B | Breite |
| 137 | Ring | H | Höhe |
| 140 | Nut | H₁ | Höhe |
| 143 | Ringabschnitt | | |
| 145 | Ring | | |
| 150 | Exzenter | | |
| 180 | Lüftungseinrichtung | | |
| 181 | Träger | | |
| 182 | Lagerstelle | | |
| 183 | C-förmiges Element | | |

## Patentansprüche

1. Spanneinrichtung einer Umreifungsvorrichtung zur Umreifung von Packgut mit einem Umreifungsband, insbesondere mit einem Kunststoffumreifungsband, das mit einem Spannrad (12) versehen ist, das mit einer Antriebseinrichtung wirkverbunden oder wirkverbindbar ist, um das Spannrad in eine Rotationsbewegung um eine Rotationsachse zu versetzen, wobei das Spannrad mit einer Umfangsfläche (12a) versehen ist, die zum Eingriff in das Umreifungsband bestimmt ist
**dadurch gekennzeichnet, daß**
im Bereich der Umfangsfläche des Spannrads zumindest ein bewegliches Abstandselement (45) am Spannrad vorgesehen ist, das in einer ersten Position und in einer sich davon unterscheidenden zweiten Position angeordnet werden kann, wobei in der ersten Position das Abstandselement - bezogen auf eine Umfangsrichtung des Spannrads - zumindest abschnittsweise mit einem ersten Abstand zur Drehachse des Spannrads und in der zweiten Position mit einem zumindest abschnittsweisen zweiten Abstand zur Drehachse des Spannrads anordenbar ist, sich hierbei der erste Abstand vom zweiten Abstand unterscheidet und das Abstandselement in zumindest einer der beiden Positionen über die Umfangsfläche des Spannrads übersteht.

2. Spanneinrichtung nach Anspruch 1, **dadurch gekennzeichnet, dass** sich das Abstandselement in einer der beiden Positionen zumindest abschnittsweise zumindest im wesentlichen auf gleicher Höhe mit der Umfangsfläche befindet.

3. Spanneinrichtung nach Anspruch 1 oder 2,**dadurch gekennzeichnet, dass** mit einer von aussen auf das Abstandselement des Spannrads aufgebrachten Kraft das Abstandselement zumindest abschnittsweise von der Position mit dem größeren radialen Abstand zur Drehachse in die andere Position mit dem geringeren radialen Abstand zur Drehachse überführbar ist.

4. Spanneinrichtung nach einem der vorhergehenden Ansprüche, **dadurch gekennzeichnet, dass** in Abhängigkeit einer Grösse der vom Band auf das Abstandselement aufgebrachten Kraft das Band sich in Anlage gegen das zumindest eine über eine Umfangsfläche des Spannrads überstehende Abstandselement befindet oder das Abstandselement vom Band zumindest abschnittsweise in eine Position in das Spannrad zurückgedrängt wird, in der das Band gegen die Umfangsfläche des Spannrads anliegt.

5. Spanneinrichtung nach einem der vorhergehenden Ansprüche, **dadurch gekennzeichnet, dass** das Abstandselement rotationsfest mit dem Spannrand und damit gemeinsam mit dem Spannrad rotierbar angeordnet ist.

6. Spanneinrichtung nach einem der vorhergehenden Ansprüche, **dadurch gekennzeichnet, dass** das zumindest eine Abstandselement in einer Nut der Umfangsfläche angeordnet ist, wobei in der ersten Position des Abstandselements letzteres zumindest abschnittsweise einen größeren radialen Abstand zur Drehachse des Spannrads und in der zweiten Position das Abstandselement zumindest abschnittsweise höchstens den gleichen oder einen geringeren Abstand als die Umfangsfläche aufweist.

7. Spanneinrichtung nach einem der vorhergehenden Ansprüche, **gekennzeichnet durch** zumindest ein in einer Nut angeordnetes federelastisches Element, gegen welches das Abstandselement anliegt.

8. Spanneinrichtung nach einem der vorhergehenden Ansprüche, **dadurch gekennzeichnet, dass** das Abstandselement durch einen auf das Abstandselement wirkenden Druck zumindest abschnittsweise von der ersten in die zweite Position überführbar ist.

9. Spanneinrichtung nach einem der vorhergehenden Ansprüche, **dadurch gekennzeichnet, dass** das Abstandselement beim Spannvorgang durch das Umreifungsband entlang eines Abschnitts des Umfangs des Spannrads in Richtung zum Nutgrund gedrückt wird, so dass das Umreifungsband zumindest im wesentlichen entlang des stets gleichen ortsfesten Winkelbereichs zur Anlage gegen eine Umfangsfläche des rotierende Spannrads gelangt.

10. Spanneinrichtung nach einem der vorhergehenden Ansprüchen, **dadurch gekennzeichnet, dass** während des Spannvorgangs das Spannrad rotiert und in Bezug auf ein ortsfestes Polarkoordinatensystem des Spannrads zumindest am im wesentlichen stets gleichen Umfangsabschnitt des Spannrads das Abstandselement in die Nut gedrückt wird, während das Abstandselement am verbleibenden Umfangsabschnitt, gegen den das Umreifungsband nicht anliegt, gegenüber der Umfangsfläche übersteht.

11. Umreifungseinrichtung zur Umreifung von Packgut mit einem Umreifungsband, mit einer Spanneinrichtung zur Aufbringung einer Bandspannung auf das Umreifungsband sowie mit einer Verschlusseinrichtung zur Erzeugung eines Verschlusses zwischen zwei übereinander liegenden Bandabschnitten des Umreifungsbands, **gekennzeichnet durch** die Spanneinrichtung nach einem der vorhergehenden Ansprüche 1 bis 10.

12. Umreifungseinrichtung nach Anspruch 11, **dadurch gekennzeichnet, dass** beim Bandrückzugsvorgang das Umreifungsband beim Spannvorgang eine Kraft auf das Spannrad ausübt, durch die das zumindest eine Abstandselement in die Umfangsfläche gedrückt wird und beim Bandrückzugsvorgang eine hierzu nicht ausreichend grosse Kraft vom Umreifungsband auf das Spannrad einwirkt.

13. Umreifungseinrichtung nach Anspruch 11 oder 12, **dadurch gekennzeichnet, dass** für den Bandvorschub, den Bandrückzug sowie für die Aufbringung der Bandspannung auf die Bandschlaufe drei Rollen, insbesondere nur drei Rollen, vorgesehen sind, wobei eine erste Rolle (11) in zwei unterschiedliche Drehrichtungen motorisch antreibbar ist und als Bandvorschub- sowie als Bandrückzugsrolle vorgesehen ist, eine zweite Rolle, die als Spannrad vorgesehen ist, in zumindest eine Drehrichtung, vorzugsweise in beide Drehrichtungen, motorisch antreibbar ist, und die dritte Rolle, die vorzugsweise motorisch nicht rotatorisch angetrieben ist, als Gegenrolle (13) vorgesehen ist und abwechselnd gegen die erste Rolle (11) oder gegen die zweite Rolle bewegbar ist.

14. Umreifungseinrichtung nach Anspruch 13, **gekennzeichnet durch** Mittel zur Rückstellung der Gegenrolle in Richtung an die Antriebsrolle in eine Position, in welcher die beiden Rollen das Umreifungsband zwischen sich einklemmen, wobei die Rückstellung der Gegenrolle vorzugsweise vor einer Ausführung eines Bandrückzugsvorgangs erfolgt.

15. Umreifungsvorrichtung mit einem in sich geschlossenen Umreifungskanal zur Führung eines Umreifungsbands während eines Umreifungsvorgangs von Packgut mit dem Umreifungsband, in dem eine Umreifungseinrichtung angeordnet ist, mit dem das Umreifungsband bewegbar und mit einer Bandspannung versehbar und mit dem zwei Bandlagen des Umreifungsbands mit einem Bandverschluss versehbar ist, **gekennzeichnet durch** eine Umreifungseinrichtung nach einem der vorhergehenden Ansprüche 11 bis 14.

## Claims

1. Tensioning device of a strapping apparatus for the strapping of packaged articles with a strapping band, in particular with a plastics strapping band, which is equipped with a tensioning wheel (12) which is operatively connected or operatively connectable to a drive device in order to set the tensioning wheel in a rotational movement about an axis of rotation, wherein the tensioning wheel is equipped with a (12a) which is designed for engaging into the strapping band, **characterized in that,** in the region of the circumferential surface of the tensioning wheel, there is provided on the tensioning wheel at least one movable spacer element (45) which can be arranged in a first position and in a second position that differs from said first position, wherein, in the first position, the spacer element can - in relation to a circumferential direction of the tensioning wheel - be arranged at least in sections with a first spacing to the axis of rotation of the tensioning wheel and, in the second position, can be arranged with a second spacing, at least in sections, to the axis of rotation of the tensioning wheel, the first spacing differs here from the second spacing, and the spacer element, in at least one of the two positions, projects beyond the circumferential surface of the tensioning wheel.

2. Tensioning device according to Claim 1, **characterized in that** the spacer element, in one of the two positions, is situated at least in sections at least substantially at the same height as the circumferential surface.

3. Tensioning device according to Claim 1 or 2, **characterized in that**, by way of a force externally applied to the spacer element of the tensioning wheel, the spacer element can be transferred at least in sections from the position with the relatively large radial spacing to the axis of rotation into the other position with the relatively small radial spacing to the axis of rotation.

4. Tensioning device according to one of the preceding claims, **characterized in that**, in a manner dependent on a magnitude of the force applied by the band to the spacer element, the band is in contact with the at least one spacer element that projects beyond a circumferential surface of the tensioning wheel, or the spacer element is, at least in sections, forced back by the band into the tensioning wheel into a position in which the band bears against the circumferential surface of the tensioning wheel.

5. Tensioning device according to one of the preceding claims, **characterized in that** the spacer element is arranged so as to be rotationally conjoint with the tensioning wheel and thus so as to be rotatable together with the tensioning wheel.

6. Tensioning device according to one of the preceding claims, **characterized in that** the at least one spacer element is arranged in a groove of the circumferential surface, wherein, in the first position of the spacer element, said spacer element has, at least in sections, a relatively large radial spacing to the axis of rotation of the tensioning wheel and, in the second position, the spacer element has, at least in sections, at most the same spacing as or a smaller spacing than the circumferential surface.

7. Tensioning device according to one of the preceding claims, **characterized by** at least one resiliently elastic element which is arranged in a groove and against which the spacer element bears.

8. Tensioning device according to one of the preceding claims, **characterized in that** the spacer element can, at least in sections, be transferred from the first into the second position by way of a pressure acting on the spacer element.

9. Tensioning device according to one of the preceding claims, **characterized in that**, during the tensioning process, the spacer element is, along a section of the circumference of the tensioning wheel, forced by the strapping band in the direction of the groove base such that the strapping band comes into contact with a circumferential surface the rotating tensioning wheel at least substantially along the always identical positionally static angle range.

10. Tensioning device according to one of the preceding claims, **characterized in that**, during the tensioning process, the tensioning wheel rotates, and, in relation to a positionally static polar coordinate system of the tensioning wheel, the spacer element is forced into the groove at least at the substantially always identical circumferential section of the tensioning wheel, whereas, at the remaining circumferential section, against which the strapping band does not bear, the spacer element projects in relation to the circumferential surface.

11. Strapping device for the strapping of packaged articles with a strapping band, which strapping device with a tensioning device for imparting a band tension to the strapping band and with a fastening device for generating a fastening between two band sections, lying one over the other, of the strapping band, **characterized by** the tensioning device according to one of the preceding Claims 1 to 10.

12. Strapping device according to Claim 11, **characterized in that**, during the band retraction process, the strapping band, during the tensioning process, exerts on the tensioning wheel a force which causes the at least one spacer element to be forced into the circumferential surface, and, during the band retraction process, a force which is not sufficient for this purpose is exerted by the strapping band on the tensioning wheel.

13. Strapping device according to Claim 11 or 12, **characterized in that** three rollers, in particular only three rollers, are provided for the band advancement, the band retraction and for the application of the band tension to the band loop, wherein a first roller (11) can be driven by motor means in two different directions of rotation and is provided as a band advancement and band retraction roller, a second roller which is provided as a tensioning wheel can be driven by motor means in at least one direction of rotation, preferably in both directions of rotation, and the third roller, which is preferably not driven in rotation by motor means, is provided as a counterpart roller (13) and can be moved alternately against the first roller (11) or against the second roller.

14. Strapping device according to Claim 13, **characterized by** means for restoring the counterpart roller in the direction of the drive roller into a position in which the two rollers clamp the strapping band between them, wherein the restoring of the counterpart roller is preferably performed before a band retraction process is performed.

15. Strapping apparatus having an encircling strapping channel for guiding a strapping band during a process of strapping packaged articles with the strapping band, in which there is arranged a strapping device by means of which the strapping band can be moved and can have a band tension imparted to it and by means of which two band layers of the strapping band can be provided with a band fastening, **characterized by** a strapping device according to one of the preceding claims 11 to 14.

## Revendications

1. Dispositif de serrage pour un dispositif de cerclage pour le cerclage de produits à emballer avec une bande de cerclage, en particulier avec une bande de cerclage en plastique, laquelle est pourvue d'une roue de serrage (12) qui est ou peut être en liaison fonctionnelle avec un dispositif d'entraînement afin de mettre en rotation la roue de serrage autour d'un axe de rotation, la roue de serrage étant pourvue d'une (12a) qui est prévu pour s'engager dans la bande de cerclage,
**caractérisé en ce que**
dans la région de la surface périphérique de la roue de serrage, au moins un élément d'espacement déplaçable (45) est prévu sur la roue de serrage, lequel peut être disposé dans une première position et dans une deuxième position différente de celle-ci, l'élément d'espacement - par rapport à une direction périphérique de la roue de serrage - pouvant être disposé dans la première position au moins en partie à une première distance à l'axe de rotation de la roue de serrage et dans la deuxième position au moins en partie à une deuxième distance à l'axe de rotation de la roue de serrage, la première distance étant dans ce cas différente de la deuxième distance et l'élément d'espacement dans au moins l'une des deux positions dépassant au-delà de la surface périphérique de la roue de serrage.

2. Dispositif de serrage selon la revendication 1, **caractérisé en ce que** l'élément d'espacement, dans l'une des deux positions, se trouve au moins en partie au moins essentiellement à la même hauteur que la surface périphérique.

3. Dispositif de serrage selon la revendication 1 ou 2, **caractérisé en ce que** l'élément d'espacement peut être transféré au moins en partie, avec une force appliquée depuis l'extérieur sur l'élément d'espacement de la roue de serrage, de la position avec la plus grande distance radiale à l'axe de rotation dans l'autre position avec la plus petite distance radiale à l'axe de rotation.

4. Dispositif de serrage selon l'une quelconque des revendications précédentes, **caractérisé en ce qu'**en fonction d'une grandeur de la force appliquée par la bande sur l'élément d'espacement, la bande se trouve en appui contre l'au moins un élément d'espacement dépassant au-delà d'une surface périphérique de la roue de serrage ou l'élément d'espacement est repoussé par la bande au moins en partie dans une position dans la roue de serrage dans laquelle la bande s'applique contre la surface périphérique de la roue serrage.

5. Dispositif de serrage selon l'une quelconque des revendications précédentes, **caractérisé en ce que** l'élément d'espacement est disposé de manière fixée en rotation avec la roue de serrage et est par conséquent disposé de manière à tourner conjointement avec la roue de serrage.

6. Dispositif de serrage selon l'une quelconque des revendications précédentes, **caractérisé en ce que** l'au moins un élément d'espacement est disposé dans une rainure de la surface périphérique, dans la première position de l'élément d'espacement, ce dernier présentant au moins en partie un plus grand espacement radial à l'axe de rotation de la roue de serrage et dans la deuxième position, l'élément d'espacement présentant au moins en partie au maximum le même espacement ou un espacement inférieur par rapport à la surface périphérique.

7. Dispositif de serrage selon l'une quelconque des revendications précédentes, **caractérisé par** au moins un élément élastique à ressort disposé dans une rainure, contre lequel s'applique l'élément d'espacement.

8. Dispositif de serrage selon l'une quelconque des revendications précédentes, **caractérisé en ce que** l'élément d'espacement peut être transféré par une pression agissant sur l'élément d'espacement au moins en partie de la première dans la deuxième position.

9. Dispositif de serrage selon l'une quelconque des revendications précédentes, **caractérisé en ce que** l'élément d'espacement, lors de l'opération de serrage par la bande de cerclage, est pressé le long d'une portion de la périphérie de la roue de serrage dans la direction du fond de rainure de telle sorte que la bande de cerclage parvienne au moins essentiellement le long de la région angulaire fixée en position toujours identique en appui contre une surface périphérique la roue de serrage en rotation.

10. Dispositif de serrage selon l'une quelconque des revendications précédentes, **caractérisé en ce que** pendant l'opération de serrage, la roue de serrage tourne et l'élément d'espacement, par rapport à un système de coordonnées polaires fixe de la roue de serrage, au moins au niveau de la portion périphérique essentiellement toujours identique de la roue de serrage, est pressé dans la rainure tandis que l'élément d'espacement, au niveau de la portion périphérique restante contre laquelle la bande de cerclage ne s'applique pas, dépasse par rapport à la surface périphérique.

11. Dispositif de cerclage pour le cerclage de produit à emballer comprenant une bande de cerclage qui avec un dispositif de serrage pour l'application d'une tension de bande à la bande de cerclage ainsi qu'avec un dispositif de fermeture pour créer une fermeture entre deux portions de bande situées l'une au-dessus de l'autre de la bande de cerclage, **caractérisé par** le dispositif de serrage selon l'une quelconque des revendications 1 à 10.

12. Dispositif de cerclage selon la revendication 11, **caractérisé en ce que** lors de l'opération de rétraction de la bande, la bande de cerclage exerce lors de l'opération de serrage une force sur la roue de serrage par laquelle l'au moins un élément d'espacement est pressé dans la surface périphérique et lors de l'opération de rétraction de la bande, une force qui n'est pas suffisante pour cela agit depuis la bande de cerclage sur la roue de serrage.

13. Dispositif de cerclage selon la revendication 11 ou 12, **caractérisé en ce que** pour l'avance de la bande, la rétraction de la bande ainsi que pour l'application de la tension de bande sur les boucles de la bande, trois rouleaux, en particulier seulement trois rouleaux, sont prévus, un premier rouleau (11) pouvant être entraîné par un moteur dans deux sens de rotation différents, et étant prévu sous forme de rouleaux d'avance de bande et de rétraction de bande, un deuxième rouleau, qui est prévu sous forme de roue de serrage, pouvant être entraîné par un moteur dans au moins un sens de rotation, de préférence dans les deux sens de rotation, et le troisième rouleau, qui de préférence n'est pas entraîné en rotation par un moteur, étant prévu sous forme de contre-rouleau (13) et pouvant être déplacé en alternance contre le premier rouleau (11) ou contre le deuxième rouleau.

14. Dispositif de cerclage selon la revendication 13, **caractérisé par** des moyens pour ramener le contre-rouleau dans la direction du rouleau d'entraînement dans une position dans laquelle les deux rouleaux serrent entre eux la bande de cerclage, la position de rappel du contre-rouleau s'obtenant de préférence avant une réalisation d'une opération de rétraction de la bande.

15. Dispositif de cerclage comprenant un canal de cerclage fermé en soi pour le guidage d'une bande de cerclage pendant une opération de cerclage de produits à emballer avec une bande de cerclage, dans lequel canal est disposé un dispositif de cerclage avec lequel la bande de cerclage peut être déplacée et peut être pourvue d'une tension de bande et avec lequel deux couches de bande de la bande de cerclage peuvent être pourvues d'une fermeture de bande, **caractérisé par** un dispositif de cerclage selon l'une quelconque des revendications précédentes 11 à 14.
